# EUROPEAN PATENT APPLICATION

(11) **EP 1 184 733 A2**
(43) Date of publication of application: **06.03.2002**
(21) Application number: 01402268.5
(22) Date of filing: 30.08.2001
(51) Int. Cl.: G03G 15/00, H04N 1/00

(54) **Remote control system, method and storage medium for image forming apparatus**

(30) Priority: 30.08.2000 JP 2000260143
(71) Applicant: Ricoh Company, Ltd., Tokyo 143-8555 (JP)
(72) Inventor: Suzuki, Koubun, Kawasaki-shi, Kanagawa-ken (JP); Takahashi, Shuichi, Sagamihara-shi, Kanagawa-ken (JP)
(74) Representative: Thévenet, Jean-Bruno

(57) **Abstract**

A center system (1) included in a remote control system is disclosed for controlling a plurality of apparatuses (12-15) including at least an image forming apparatus, based on information received by way of a telecommunication network (5) interconnected to the apparatuses. On receiving the information concerning pre-maintenance from any one of the apparatuses such as a facsimile apparatus (12), copying machine (13) and others, which are divided into a predetermined number of groups, the center system (1) instructs to collect the information related to the pre-maintenance from all of the plurality of apparatuses (12-15) included in the same group. Alternatively, the center system (1) may also instruct to accumulate the received information into a temporal reception data base, and to retrieve the information related to that received from all other apparatuses in the same group from the temporal reception data base.

## Description

### BACKGROUND

### Field

This patent specification relates generally to a system and method for remote control, and more specifically to a system, method and computer accessible storage medium for implementing remote control of image forming apparatuses, which are connected to a central control system, based on information transferred by way of telecommunication network.

### Discussion of the Background

A remote control method has been known for image forming apparatuses, in which a central control system located at a service center is transmissively connected to these apparatuses of various customers by way of telecommunication network (such as the public switched telephone network) to transmit information and to perform the control based on the information.

Previous control systems, therefore, have the construction such that a central control system is connected to a plurality of image forming apparatus via telecommunication network, a variety pieces of information are relayed through the network, and the control is performed by the central control system based on the information.

When a fault (or anomaly) takes place to an apparatus on the customer side, the fault is reported to the central control system regarding the kind of fault, name and model of the apparatus, and time of fault occurrence, among others. In addition, the fault report is then displayed on a display screen of computer terminal (client computer).

On the display of the fault report, an operator at the terminal finds the details of the apparatus and customer such as the location of installation, time of fault occurrence (year, month, day, hour and minute), nature of the fault, method of fault recovery and so on.

The operator then determines from the content of report whether a service engineer is to be dispatched, to subsequently make several arrangements such as, for example, issuing a request to the client depot (service center), if necessary, for dispatching a service engineer (or sales engineer) in charge from the depot.

In addition, when a due date is approached regarding to the pre-maintenance or to expendable supplies and material, this is automatically reported, and the central control system instructs to display the report on the display screen of the terminal computer.

When the report (or information) is displayed on the pre-maintenance, or on the expendable supplies and material, a center operator finds from the content of the display the details of the customer, from which the information is sent, regarding to the time (year, month, day, hour and minute) of the arrival of the pre-maintenance, or supplementing the expendable supplies such as paper sheets, toner and others.

The operator then determines whether a service engineer is to be dispatched, and subsequently makes several arrangements such as, for example, issuing a request to the client depot, if necessary, for dispatching from the depot an engineer in charge and for the delivery of the supplies.

Since the arrangement by the side of the center operator is thus made each time when the information is received, this may result in inconveniences caused by overlap of the information.

For example, a service engineer is already dispatched to a first customer to deal with a report previously received. When another information is then received by the center operator regarding to the request of service dispatch to a second customer who is closely located (e.g., at the same floor in the same building) to the first customer, the service engineer may not be able to respond to the second customer simply because the engineer is already working for the first customer.

Namely, even when an anomaly report is received at nearly the same time from nearly the same location (e.g., the same floor in the same building), this report may not be properly put into a service action, because of the above noted report overlap caused in the previous methods.

In order to deal further with the second report, therefore, another service call becomes necessary from the scratch, to thereby result in disadvantages such as inefficiency in the service activity as a whole, and undue increase in the cost for the activity.

It is therefore desirable to provide a method capable of alleviating these advantages, thereby increasing the efficiency in the service activity and reducing undue cost for the activity.

### SUMMARY

Accordingly, it is an object of the present disclosure to provide improved method and system for properly controlling image forming apparatuses, having most, if not all, of the advantages and features of similar employed apparatus and method, while eliminating many of their disadvantages.

It is another object of the present disclosure to provide a system, method and computer accessible storage medium for implementing remote control of image forming apparatuses which are connected to a central control system based on information transferred via the telecommunication network.

The following brief description is a synopsis of only selected features and attributes of the present disclosure. A more complete description thereof is found below in the section entitled "Description of the Preferred Embodiments".

A remote control system for controlling a plurality of apparatuses including at least an image forming apparatus is disclosed herein, including a central control system (or center system) comprising a computer unit for receiving information from the plurality of apparatuses via respective telecommunication networks interconnected thereto, and for remotely controlling the plurality of apparatuses based on the information received via the respective telecommunication networks; and including information collection means for collecting, based on the kind of the information presently received, related information from all of the plurality of apparatuses included in the same groups other than that, from which the information is originally transmitted, in the case where the information is received by the center system from any one of the plurality of apparatuses to be remotely controlled, which are divided into a predetermined number of groups.

The remote control system may also include information processing means for processing the information either received from the plurality of apparatuses or collected by the information collection means; information transmission means for transmissively connecting to respective computer systems or terminal units provided by a plurality of service centers (service depots) so as to control the plurality of image forming apparatuses in a manner divided into a predetermined number of groups, and subsequently transmitting the information processed by the information processing means; and means for setting in advance the kind of the information, for which the collection process by the information collection means is allowed.

In addition, the information collected from all of the plurality of apparatuses by the information collection means is related to the items of pre-maintenance, or of expendable supplies and material.

According to another aspect, the remote control system for controlling a plurality of apparatuses including at least an image forming apparatus, includes a central control system comprising a computer unit for receiving information from the plurality of apparatuses via respective telecommunication networks interconnected thereto, and for remotely controlling the plurality of apparatuses based on the information received via the respective telecommunication networks; information accumulation means for accumulating information, in the case where the information is received by the central control system from any one of the plurality of apparatuses, which are divided into a predetermined number of groups; and information retrieval means for retrieving, based on the kind of the information presently received, related information from all of the plurality of apparatuses included in the same groups other than that, from which the information is originally transmitted, in the case where the information is received by the central control system from any one of the plurality of apparatuses.

The remote control system may also include information processing means for processing the information which is either received from the plurality of apparatuses or retrieved by the information retrieval means; information transmission means for transmissively connecting to respective computer systems provided by a plurality of service centers so as to control the plurality of image forming apparatuses in a manner divided into a predetermined number of groups, and subsequently transmitting the information processed by the information processing means; means for setting in advance the kind of the information, for which the retrieval process by the information retrieval means is allowed, and group setting means for setting a group in advance by dividing the plurality of image forming apparatuses into a predetermined number of groups.

According to still another aspect, the remote control system includes at least a central control system comprising a computer unit for receiving information from the plurality of apparatuses via respective telecommunication networks interconnected to the plurality of apparatuses, and for remotely controlling the plurality of apparatuses based on the information received via the respective telecommunication networks; information collection means for collecting, based on the kind of the information presently received, related information from all of the plurality of apparatuses included in the same groups other than that, from which the information is originally transmitted, in the case where the information is received by the central control system from any one of the plurality of apparatuses to be remotely controlled, which are divided into a predetermined number of groups; first information processing means for processing the information received from any one of the plurality of apparatuses; first information transmission means for transmissively connecting to respective terminal units provided by a plurality of service centers so as to control the plurality of image forming apparatuses in a manner divided into a predetermined number of groups, and subsequently transmitting the information processed by the information processing means; information accumulation means for accumulating information, in the case where the information is received from any one of the plurality of apparatuses to be remotely controlled, which are divided into a predetermined number of groups; information retrieval means for retrieving, based on the kind of the information presently received, related information from all of the plurality of apparatuses included in the same groups other than that, from which the information is originally transmitted, in the case where the information is received by the central control system from any one of the plurality of apparatuses; second information processing means for processing the information either received from any one of the plurality of apparatuses or retrieved by the information retrieval means; second information transmission means for transmissively connecting to respective terminal units provided by a plurality of service centers so as to control the plurality of image forming apparatuses in a manner divided into a predetermined number of groups, and subsequently transmitting the information processed by the information processing means; and means for determining one between following two: whether any one of processing steps by the information collection means, first information processing means, first information transmission means, information retrieval means, second information processing means, and second information transmission means, is allowed, or none of the steps is allowed.

According to another aspect, a method for controlling a plurality of apparatuses including at least an image forming apparatus is disclosed, including at least the step of receiving information relayed to a central control system from the plurality of apparatuses via respective telecommunication networks; controlling remotely the plurality of apparatuses based on the thus received information; collecting information related to pre-maintenance and to expendable supplies and material from all of the plurality of apparatuses included in the same groups other than that, from which the information is originally transmitted, in the case where the information related to pre-maintenance and to expendable supplies and material is received from any one of the plurality of apparatuses; processing either received or collected information by information processing means; transmissively connecting to respective terminal units provided by a plurality of service centers so as to control the plurality of image forming apparatuses in a manner divided into a predetermined number of groups; and transmitting the information processed by the information processing means.

The method may further include the steps of performing alteration and addition onto the information processed by the information processing means; and outputting the information processed by the information processing means through the means of a display device, a paper sheet or audible voice, and transmitting the information processed by the information processing means, in case where a request for acquiring the processed information is received from any one of terminal units.

According to another aspect, a central control system (or center system) included in the remote control system is disclosed for controlling a plurality of apparatuses including at least an image forming apparatus, based on information received by the central control system via respective telecommunication networks interconnected to the plurality of apparatuses, including at least information collection means for collecting, based on the kind of the information presently received, related information from all of the plurality of apparatuses included in the same groups other than that, from which the information is originally transmitted, in the case where the information related to pre-maintenance and to expendable supplies and material is received by the central control system from any one of the plurality of apparatuses to be remotely controlled, which are divided into a predetermined number of groups; first information processing means for processing the information received from any one of the plurality of apparatuses; first information transmission means for transmissively connecting to respective terminal units provided by a plurality of service centers so as to control the plurality of image forming apparatuses in a manner divided into a predetermined number of groups, and subsequently transmitting the information processed by the information processing means; information accumulation means for accumulating information, in the case where the information is received from any one of the plurality of apparatuses to be remotely controlled, which are divided into a predetermined number of groups; information retrieval means for retrieving, based on the kind of the information presently received, related information from all of the plurality of apparatuses included in the same groups other than that, from which the information is originally transmitted, in the case where the information is received by the central control system from any one of the plurality of apparatuses; second information processing means for processing the information either received from any one of the plurality of apparatuses, or retrieved by the information retrieval means; second information transmission means for transmissively connecting to respective terminal units provided by a plurality of service centers so as to control the plurality of image forming apparatuses in a manner divided into a predetermined number of groups, and subsequently transmitting the information processed by the information processing means; and means for determining whether any one of processing steps by the information collection means, first information processing means, first information transmission means, information retrieval means, second information processing means, and second information transmission means, is allowed, or none of the steps is allowed.

According to another aspect, a computer accessible recording medium is disclosed, tangibly embodying a program of instructions executable by a central control system included in a remote control system to perform method steps for controlling a plurality of apparatuses including at least an image forming apparatus, based on information received by the central control system via respective telecommunication networks interconnected to the plurality of apparatuses, in which the steps includes at least collecting, based on the kind of the information presently received, related information from all of the plurality of apparatuses included in the same groups other than that, from which the information is originally transmitted, in the case where the information related to pre-maintenance and to expendable supplies and material is received by the central control system from any one of the plurality of apparatuses to be remotely controlled, which are divided into a predetermined number of groups; processing the information received from any one of the plurality of apparatuses; transmissively connecting to respective terminal units provided by a plurality of service centers so as to control the plurality of image forming apparatuses in a manner divided into a predetermined number of groups, and subsequently transmitting the information processed by the information processing means; accumulating the information, in the case where the information is received from any one of the plurality of apparatuses to be remotely controlled, which are divided into a predetermined number of groups; retrieving, based on the kind of the information presently received, related information from all of the plurality of apparatuses included in the same groups other than that, from which the information is originally transmitted, in the case where the information is received by the central control system from any one of the plurality of apparatuses; processing the information either received from any one of the plurality of apparatuses or retrieved by the information retrieval means; transmissively connecting to respective terminal units provided by a plurality of service centers so as to control the plurality of image forming apparatuses in a manner divided into a predetermined number of groups, and subsequently transmitting the information processed by the information processing means; and determining whether any one of processing steps by the information collection means, first information processing means, first information transmission means, information retrieval means, second information processing means, and second information transmission means, is allowed, or none of the steps is allowed.

### BRIEF DESCRIPTION OF THE DRAWINGS

FIG. 1 is a schematic diagram illustrating the construction of a remote control system for the image forming apparatuses according to one embodiment disclosed herein;
FIG. 2 is a schematic diagram illustrating the construction of a center system included in the image forming apparatus control system, and service depots, according to one embodiment disclosed herein;
FIG. 3 is a block diagram illustrating the configuration of the clients 2a, 2b, ... 2n, and the server of FIG. 2;
FIG. 4 includes a table illustrating the content of customer information stored in the customer data base (DB) of FIG. 2;
FIG. 5 includes a further table illustrating the content of customer information stored in the customer DB of FIG. 2;
FIG. 6 includes a table illustrating the content of customer information stored in the temporal reception DB 59b of FIG. 2;
FIG. 7 is a block diagram illustrating the construction of the communication adapter 11 of FIG. 1;
FIG. 8 is a schematic diagram illustrating the construction of a remote control system for the image forming apparatuses according to another embodiment disclosed herein;
FIG. 9 is a block diagram illustrating the construction of the communication adapter of FIG. 8;
FIG. 10 includes a flow chart illustrating an information process flow for the center system according to one embodiment disclosed herein;
FIG. 11 includes a flow chart illustrating an information process flow for the center system according to another embodiment disclosed herein;
FIG. 12 includes a flow chart illustrating an information process flow for the center system according to still another embodiment disclosed herein;
FIG. 13 includes a flow chart illustrating an information process flow for the center system according to another embodiment disclosed herein;
FIG. 14 includes a flow chart illustrating an information process flow for the center system according to another embodiment disclosed herein;
FIG. 15 includes a flow chart illustrating an information process flow for the center system according to another embodiment disclosed herein;
FIG. 16 includes a flow chart illustrating an information process flow for the center system according to another embodiment disclosed herein;
FIG. 17 includes a table illustrating the content of information for use in processing steps of FIG. 12;
FIG. 18 is a schematic diagram illustrating the system configuration according to another embodiment disclosed herein;
FIG. 19 is a schematic diagram illustrating the control system configuration according to another embodiment disclosed herein;
FIG. 20 is a schematic diagram illustrating the control system configuration according to another embodiment disclosed herein;
FIG. 21 is a schematic diagram illustrating the control system configuration according to another embodiment disclosed herein;
FIG. 22A includes a table illustrating a data format for data request according to another embodiment disclosed herein; and
FIG. 22B includes a table illustrating a data format for data response corresponding to the table in FIG. 22A.

### DESCRIPTION OF THE PREFERRED EMBODIMENTS

In the description which follows, specific embodiments of the system, method and storage medium are detailed, which are particularly useful for controlling image forming apparatuses.

It is understood, however, that the present disclosure is not limited to these embodiments. For example, the use of the system and method together with the storage medium disclosed herein may also be adaptable to any form of remote control via communication network. Other embodiments will be apparent to those skilled in the art upon reading the following description.

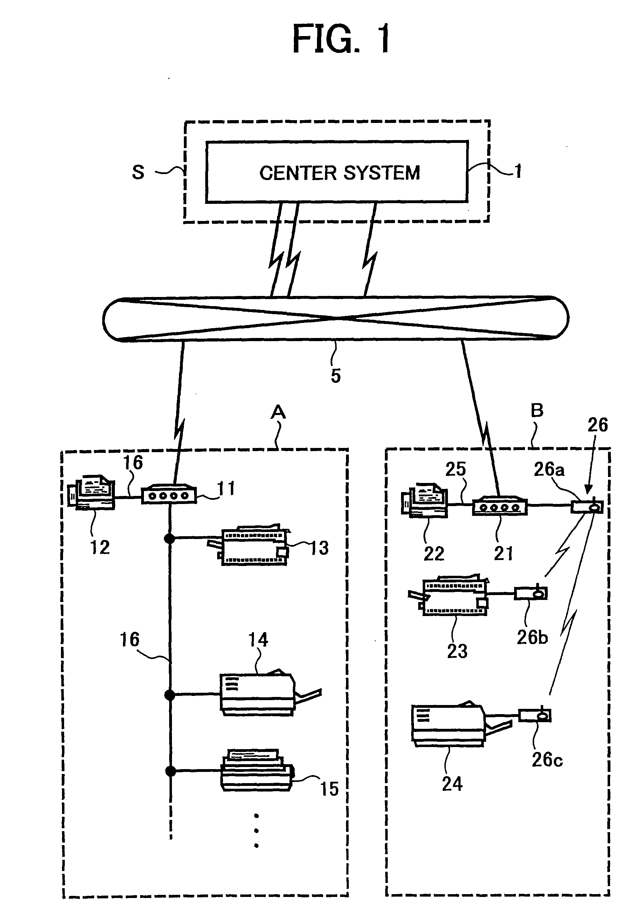

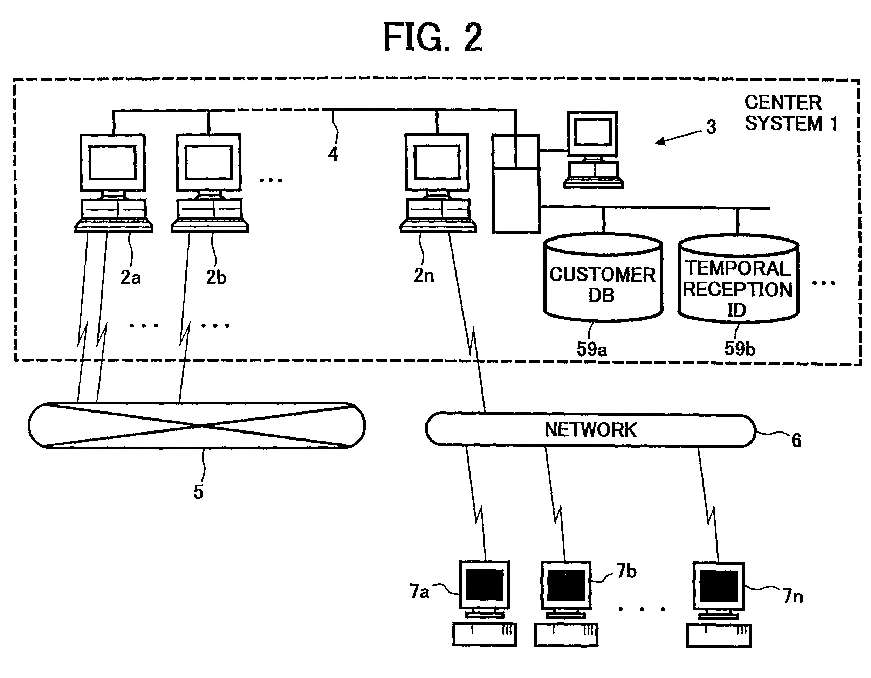

FIG. 1 is a schematic diagram illustrating the construction of a remote control system for the image forming apparatuses (hereinafter referred to as image forming apparatus control system), and FIG. 2 is a schematic diagram illustrating the configuration of a center system (or central control system ) included in the image forming apparatus control system, and service locations, according to one embodiment disclosed herein.

Referring to FIGS. 1 and 2, the image forming apparatus control system includes at least the center system 1 installed at a service center S, a plurality of electronic apparatuses provided on the side of various customers (users) A, B, ... , and a plurality of terminal units 7a, 7b, ... 7n (or computer systems including the terminal units) located at respective service centers (or service depots).

Incidentally, exchange systems for the customers A, B, ... are herein abbreviated in the drawing.

The center system 1 is thus provided with a plurality of client computers (hereinafter referred to as clients) 2a, 2b, ... 2n, and a server 3, which are interconnected via the network system 4 such as LAN. The clients 2a, 2b, ... 2n are, in turn, connected respectively either to communication adapters 11, 12, ... of respective customers A, B, ... via the public switched telephone network 5 (or other communication network), or to the terminal units 7a, 7b, ... 7n located respectively at service centers via the net work system 6 (or other communication network) such as LAN.

Being located at respective service centers, the terminal units 7a, 7b, ... 7n are utilized to control the plurality of image forming apparatuses, which are provided by a plurality of customers (users) A, B, ... , and are divided into the predetermined number of groups.

On the side of customer A (FIG. 1), there provided are a communication adapter 11 to be utilized for connecting electronic apparatuses to the center system 1 in the service center S via the public switched telephone network 5 (or other communication network), a plurality of image forming apparatuses such as a facsimile apparatus (FAX) 12, copying machine 13, printer 14 and printing machine 15.

In addition, the image forming apparatuses and communication adapter 11 are further interconnected with a wire exclusive interface (I/F) 16.

On the side of customer B, there provided are another communication adapter 21 to be utilized for connecting electronic apparatuses to the center system 1 in the service center S via the public switched telephone network 5 (or other communication network), a plurality of image forming apparatuses such as a facsimile apparatus (FAX) 22, copying machine 23 and printer 24.

In addition, the image forming apparatuses and communication adapter 21 are further interconnected with a wireless exclusive interface (I/F) 26.

The wireless exclusive I/F 26 includes at least plural wireless communication apparatuses 26a, 26b and 26c which are connected to the communication adapter 21, copying machine 23 and printer 24, respectively.

Incidentally, a network such as LAN may alternatively be used in place of either wire exclusive I/F 16 or wireless exclusive IF 26, which will be detailed later on.

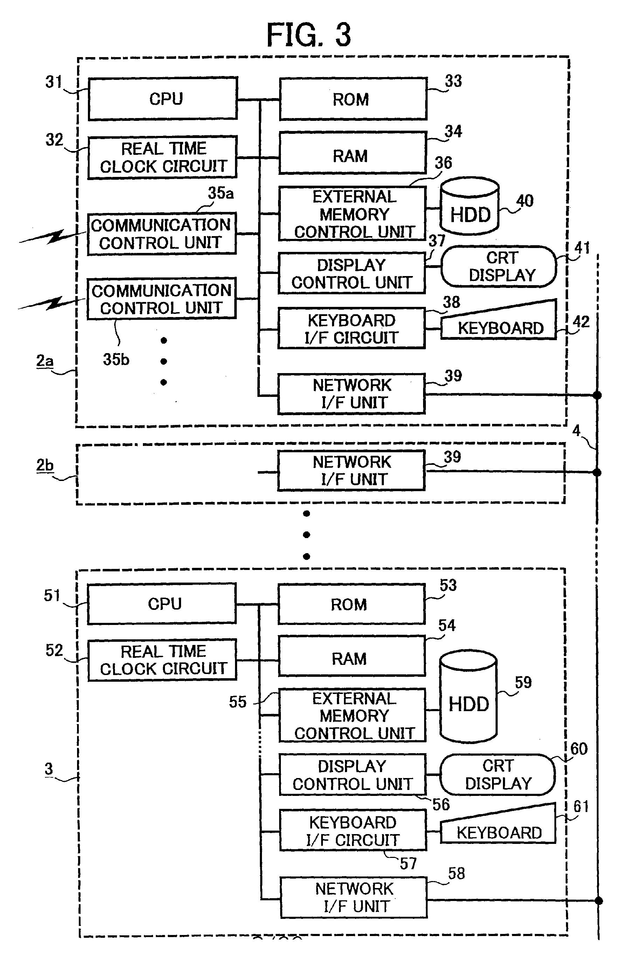

FIG. 3 is a block diagram illustrating the configuration of the clients 2a, 2b, ... 2n, and the server 3, of FIG. 2.

Referring to FIG. 3, the client 2a includes at least CPU 31, real time clock circuit 32, read only memory (ROM) 33, random access memory (RAM) 34, communication control units 35a, 35b, ... , external memory control unit 36, display control unit 37, keyboard I/F circuit unit 38, network I/F unit 39, hard disk unit 40, CRT display 41 and keyboard 42.

Since the configuration of the client 2b is similar to that of the client 2a described just above, the graphic representation and description thereof are abbreviated herein with the exception of the network I/F unit 39.

In addition, since other clients in the center system 1 are each have a similar configuration to that of the client 2a, the drawing and description thereof are abbreviated herein.

The CPU 31 operates as a central processing unit to take overall control of the client 2a by means of control programs. The real time clock circuit 32 generates time information which is read by the CPU 31 to be used in the control, and the ROM 33 is a read only memory unit for storing various fixed data to be utilized by the CPU 31.

The RAM 34 is a rewritable memory unit to be utilized by the CPU 31 as a working memory for data processing. The communication control units 35a, 35b each take control of communicating with various external units via the public switched telephone network 5, and the external memory control unit 36 takes interface control of the hard disk unit (HDD) 40.

The display control unit 37 takes interface control of the CRT display 41 (or other display unit such as LCD display, as well).

The keyboard I/F circuit unit 38 takes interface control of the keyboard 42. Similarly, the network I/F unit 39 takes interface control of other clients such as including 2b, for example, and the server 3.

Referring again to FIG. 3, the server 3 includes at least CPU 51, real time clock circuit 52, ROM 53, RAM 54, external memory control unit 55, display control unit 56, keyboard I/F circuit unit 57, network I/F unit 58, HDD 59, CRT display 60 and keyboard 61.

The CPU 51 operates as a central processing unit to take overall control of the server 3 by means of control programs stored in the ROM 53.

The real time clock circuit 52 generates time information which is read by the CPU 51 to be used in the control of the server 3. The ROM 53 is a read only memory unit for storing various fixed data to be utilized by the CPU 51, and the RAM 54 is a rewritable memory unit to be utilized for data processing by the CPU 51 as a working memory for data processing.

The external memory control unit 55 takes interface control of the HDD 59. The HDD 59 stores several data including at least the customer data base (DB) 59a and the temporal reception DB 59b, shown in FIG. 2.

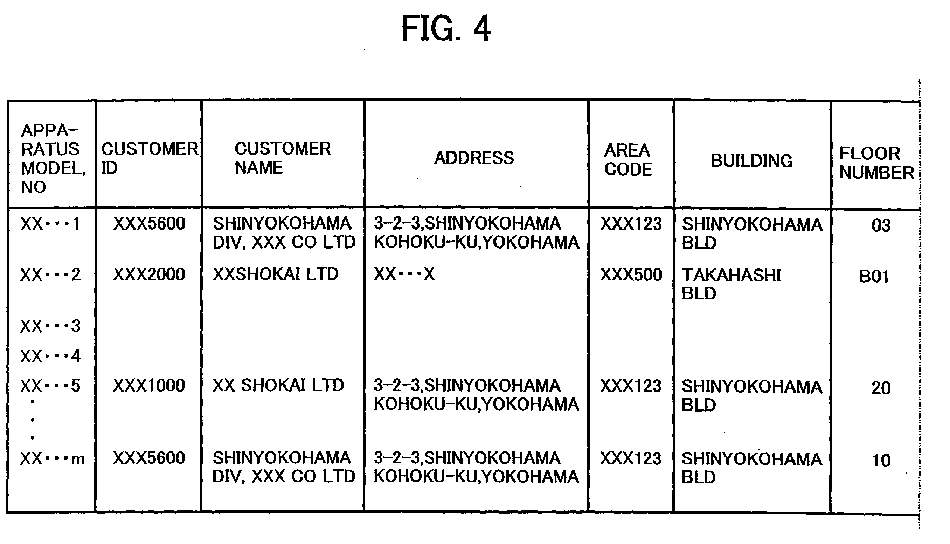

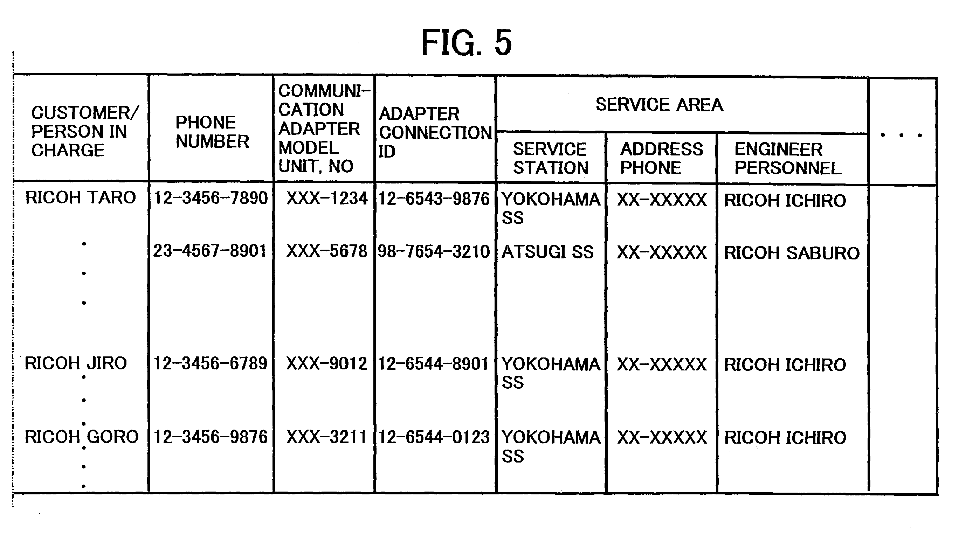

As shown in FIGS. 4 and 5, the customer DB 59a is adapted to store various pieces of information (customer information) utilized to specify the customers, consisting of the name and model of the apparatus; ID, name, address, area code, building name and floor number of the customer; name and phone number of the person in charge; name, model, unit number and connection ID of the communication adapter; name, address, engineer personnel (or service engineer in charge) of respective service depots.

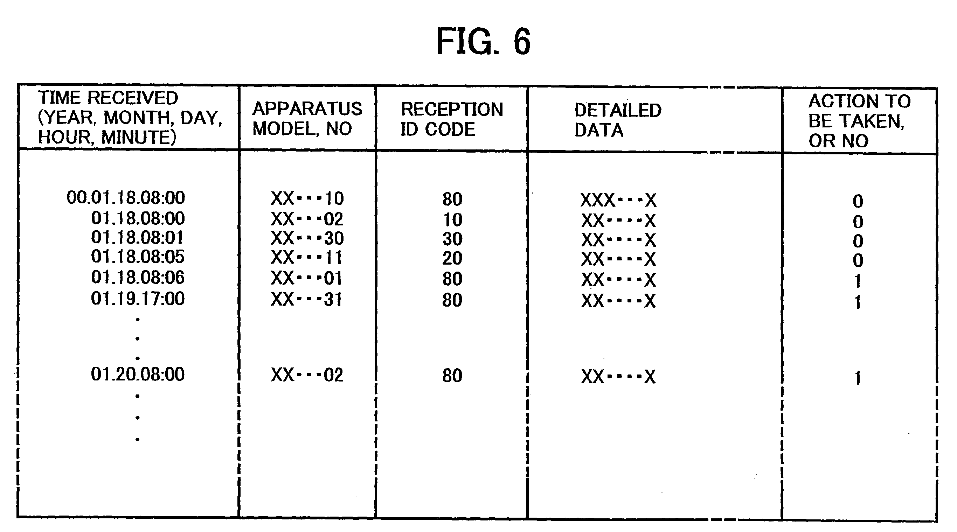

The temporal reception DB 59b is adapted to store temporal information which is received from the customers A, B,... as shown in FIG. 6, consisting of time of receiving the information (year, month, day, hour and minute); name, model and manufacturing number of the apparatus; reception ID code; detailed data, information regarding the propriety for the maintenance operation and so on.

The display control unit 56 takes interface control of the CRT display 60 (or other display unit such as LCD display, as well). The keyboard I/F circuit unit 57 takes interface control of the keyboard 61. Similarly, the network I/F unit 58 takes interface control of other clients 2a, 2b, ... 2n connected to the network 4.

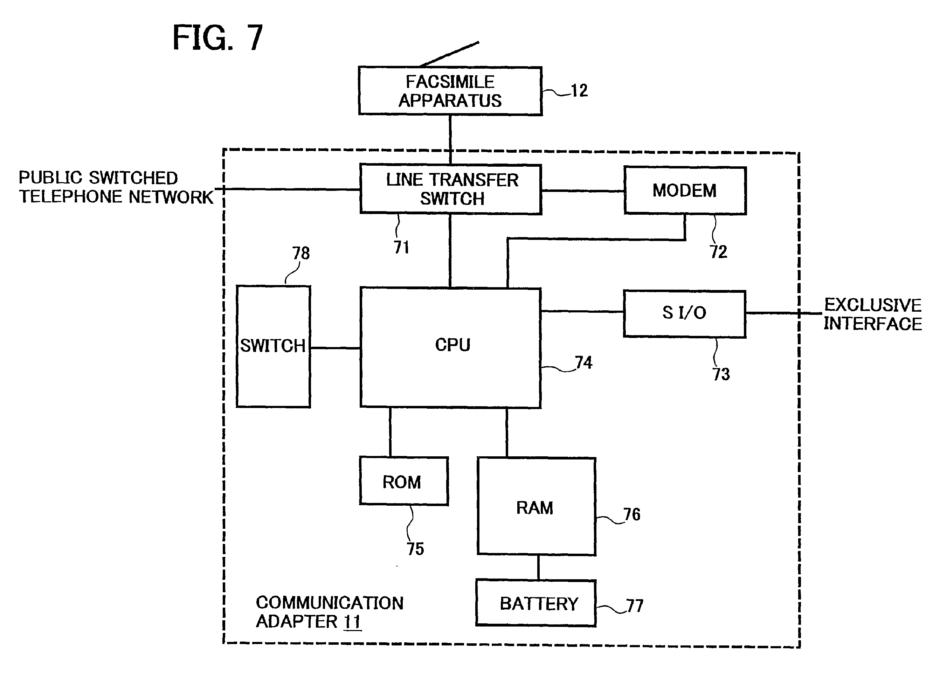

FIG. 7 is a block diagram illustrating the construction of the communication adapter 11 of FIG. 1. Since the configuration of the communication adapter 21 is similar to that of the adapter 11, the graphic representation and description thereof are herein abbreviated.

Referring to FIG. 7, a variety of data sent through the public switched telephone network 5 is first input to a line transfer switch 71. If the data transmission from the network 5 is addressed to the FAX 12 connected to the communication adapter 11, the line transfer switch 71 is adapted to connect the network 5 to the FAX 12. In contrast, if the data transmission is sent from the center system 1, the switch 71 is adapted to connect the network 5 to the modem 72.

In addition, the communication adapter 11 is adapted to communicate with the image forming apparatus such as copying machine 13 by means of the communication interface (Serial I/O or S I/O) 73 using an RS-485 type transceiver, for example. These control and processing operations are conducted primarily by CPU 74 according to control programs.

The RAM 76 is in use for tentatively storing a variety of data and supplied with a backup battery 77 connected thereto.

The switch 78 is adapted to selectively switch among various modes of the processing operation. Further, the communication adapter 11 is designed to perform poling actions consistently and periodically onto respective image forming apparatuses connected thereto, which is performed according to the order of device address.

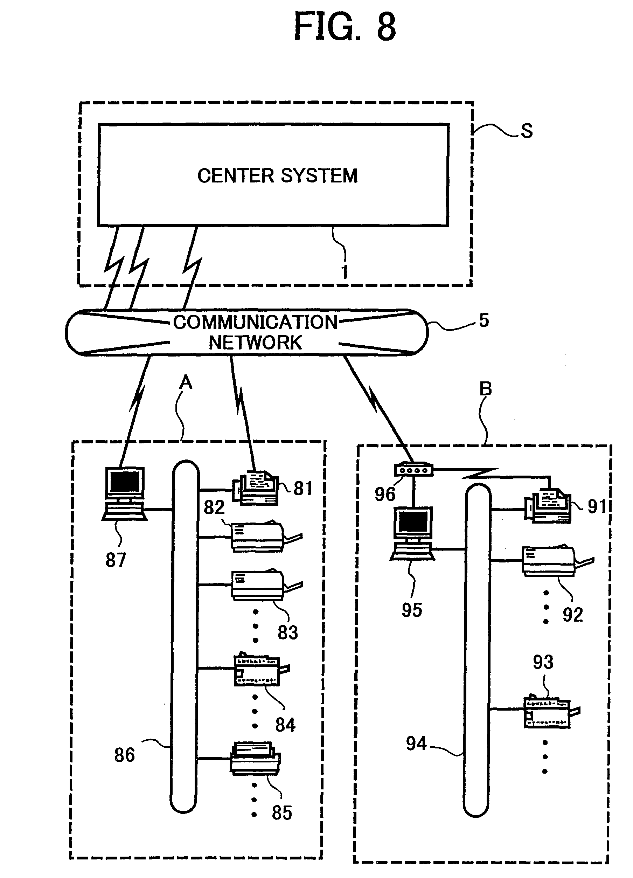

FIG. 8 is a schematic diagram illustrating the construction of a further remote control system for the image forming apparatuses according to another embodiment disclosed herein. It is noted that like reference numerals in FIG. 8 designate identical or corresponding parts of FIG. 1.

Referring to FIG. 8, the image forming apparatus control system includes at least the center system 1 installed at a service center S, a plurality of electronic apparatuses provided on the side of various customers A, B, ... , a plurality of terminal units 7a, 7b, ... 7n (or computer systems including the terminal units) located at respective service centers, in a similar manner as shown in FIG. 2.

Incidentally, exchange systems for the customers A, B, ... are herein abbreviated in the present drawing.

The center system 1 is thus provided with a plurality of client computers (hereinafter referred to as clients) 2a, 2b, ... 2n, and a server 3, which are interconnected via the net work system 4 such as LAN.

The clients 2a, 2b, ... 2n are, in turn, connected respectively either to network (NW) control unit 87 or communication adapters 96, ... via the public switched telephone network 5 (or other communication network), or to the terminal units 7a, 7b, ... 7n located respectively at service centers via the net work system 6 (or other communication network) such as LAN.

On the side of customer A (FIG. 8), there provided are several image forming apparatus as the electronic apparatuses, including a FAX 81, printers 82 and 83, copying machine 84 and printing machine 85. These apparatuses are then interconnected via the net work system 86 such as LAN. In addition, the NW control unit 87 is adapted to properly interconnect the network 86 and the public switched telephone network 5 (or other communication network).

On the side of customer B, there provided as the electronic apparatuses are several image forming apparatus, including a FAX 91, printers 92 and copying machine 93. These apparatuses are then connected via the net work system 94 such as LAN. In addition, the NW control unit 95 is adapted to properly interconnect the network 94 and the public switched telephone network 5 (or other communication network).

Further, the FAX 91 with the network 94 is made directly connectable to the public switched telephone network 5, the communication adapters 96 is provided between the NW control unit 95 and the public switched telephone network 5; and the above noted FAX 91, that is directly connectable to the public switched telephone network 5, is connected to the communication adapters 96.

Incidentally, when any other image forming apparatus is available to be connectable directly to the public switched telephone network 5, this apparatus can be connected to the communication adapters 96.

In addition, the configuration of the clients 2a, 2b, ... 2n, and the server 3 is broadly similar to that previously shown in FIG. 3, with the exception that the content, which is stored in the customer DB 59a in the server 3, is slightly different from that shown in FIGS. 4 and 5.

Namely, data consisting of unit name, model, manufacture number and network address (IP address) of the network control system are included in place of name, model, unit number and connection of the communication adapter.

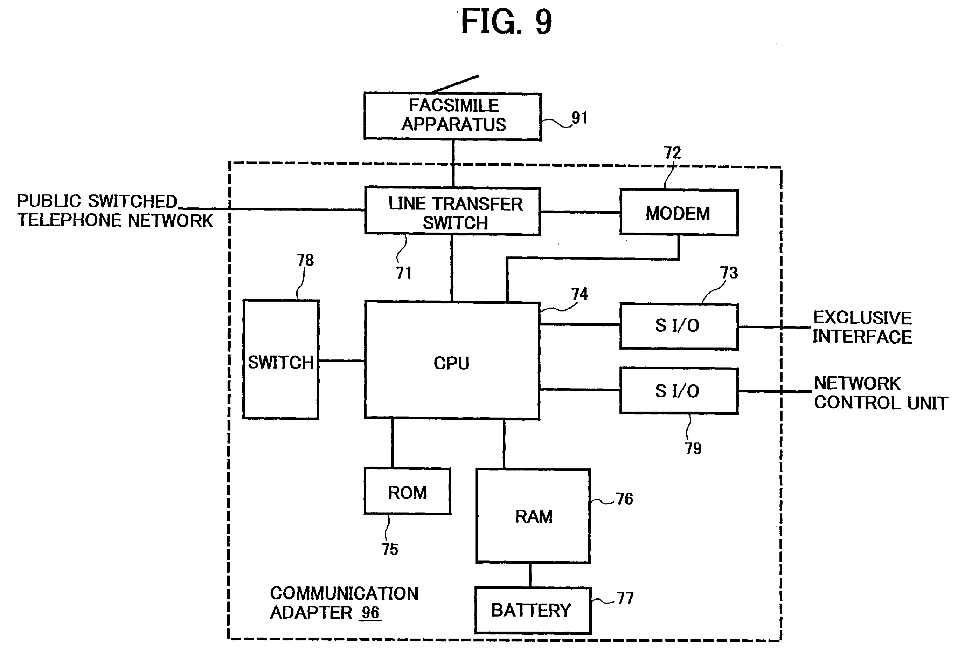

FIG. 9 is a block diagram illustrating the construction of the communication adapter 96 of FIG. 8. Like reference numerals in FIG. 9 designate identical or corresponding part in FIG. 7, and the description on the identical portions is herein abbreviated.

The communication adapter 96 is adapted to communicate with the NW control unit 95 by means of the communication interface (S I/O) 73 using an RS-485 type transceiver, for example.

The center system 1 of FIGS. 1 and 8 is then able to implement various modes of the present disclosure. Namely, systems and process steps disclosed in the present description may be implemented by executing a plurality of programs stored in various storage media.

For example, storage media may be prepared for storing a variety of programs in the center system 1 to execute the above described steps for processing information and deciding conditions. The storage media may include computer accessible storage media such as an external floppy disk and optical disk, among others. These storage media may subsequently be installed into an internal HDD unit, non-volatile RAM or RAM, to thereby be able execute necessary steps to embody the various modes of the present disclosure according to various programs.

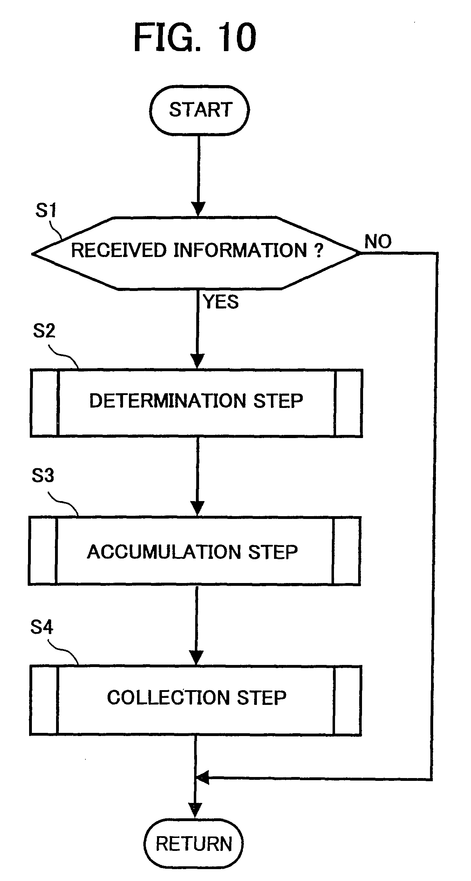

After describing the embodiments of the system, method and storage medium herein above, information process steps implemented in the image forming apparatus control system of FIG. 1 or 8 will be detailed according to specific embodiments with reference to FIGS. 10 through 22.

Also in the following description referring to drawings, FIGS. 10 through 16 each contain flow charts illustrating information process flows for respective embodiments, in which the number of each step is headed by 'S' for abbreviation.

Information process steps according to a first embodiment are described herein below with reference to FIG. 10, which includes a flow chart illustrating an information process flow for the center system 1 including a plurality of clients 2a, 2b, ... 2n.

Referring to FIG. 10, the clients 2a, 2b, ... 2n in the center system 1 each initiate regularly and periodically the process steps shown in the figure as follows.

The process begins in step S1 where a program checks if any information is received. As described earlier, a plurality of customers A, B, ... each provided with a plurality of image forming apparatuses, which are divided into a predetermined a predetermined number of groups so as to facilitate their identification.

In step 1, therefore, an inquiry is made regarding whether information is received from any one of the plurality of image forming apparatuses (FIG. 1 or 8), which are provided by a plurality of customers A, B, ..., and divided into the predetermined number of groups. If the information is received already from any of the image forming apparatuses, the process proceeds to Step 2, where a program is executed to identify the kind of the received information.

Subsequently, the thus received information is processed in step 3 so as to be accumulated into a temporal reception DB 59b (memory) included in the server 3.

After completing Step 3, the process proceeds to Step 4, where a program is executed, in response to the kind of the received information identified as above, to collect the corresponding information from other image forming apparatuses included in the same groups other than that, from which the information is originally received.

As an example, when the client 2a included in the center system 1 receives, from one of image forming apparatuses within its interconnection, information regarding the arrival of the pre-maintenance date (or pre-maintenance date information), several steps are executed so as to identify the kind of the thus received information, to store (or accumulate) the information into a temporal reception DB 59b in the server 3, and then to collect, in response to the kind of the received information, the information related to the arrival of the pre-maintenance date (pre-maintenance date information) from other image forming apparatuses included in the same groups other than that, from which the information is originally transmitted.

Namely, based on the kind of the received information thus obtained, by sending out sensing instructions to other image forming apparatuses included in the same groups within its interconnection other than that, from which the information is originally transmitted (i.e., to other image forming apparatuses included in the same groups other than that, from which the pre-maintenance date information is transmitted), responded information (on the pre-maintenance date) can thus be collected from all of other image forming apparatuses.

Based on the content of the thus collected information, it becomes feasible to decide whether any of the other image forming apparatuses reaches its pre-maintenance date, subsequently to arrange a pre-maintenance for the image forming apparatuses for which the pre-maintenance date is reached, if any.

For example, if the service center is 'Yokohama SS' included in FIG. 5 for controlling the other image forming apparatuses within its interconnection, image forming apparatuses to be presently subjected can be identified, by retrieving the customer DB 59a, as those having the name and number apparatus such as ┌XX ··· 1┘, ┌XX ··· 5┘ and ┌XX ··· m┘. By subsequently sending out sensing instructions to those image forming apparatuses based on the thus retrieved information, responded information transmitted back from each of the presently subjected apparatuses can thus be collected.

Subsequently, based on the content of the thus collected responded information, inquiry is made whether image forming apparatuses ┌XX ··· 1┘, ┌XX ··· 5┘ and ┌XX ··· m┘ each reach their respective pre-maintenance dates. When image forming apparatuses among those are found, if any, to reach the pre-maintenance date, this result is reported to be subjected to possible maintenance process.

As described above, when information is received by the respective clients 2a, 2b, ..., 2n in the center system 1 from any one of the plurality of image forming apparatuses, which are divided into a predetermined number of groups, the center system 1 instructs to collect responded information from all of the image forming apparatuses included in the same groups within its interconnection other than that, from which the information is originally transmitted.

With the thus collected information, a service engineer can therefore deal with incoming information by effective remedial measures in efficient and economical manner when the information is received. As a result, the efficiency of maintenance service activity is increased with a reduced cost of service operations.

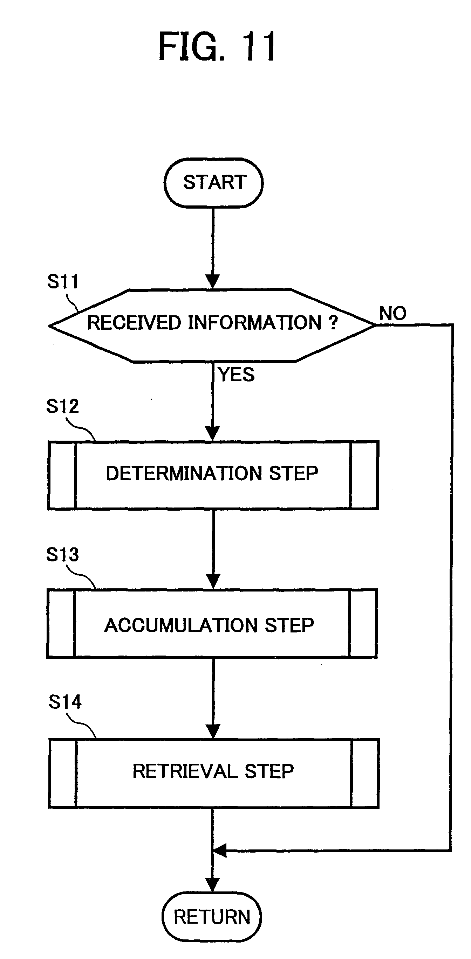

Process steps according to a second embodiment are described herein below with reference to FIG. 11, which includes a flow chart illustrating a further information process flow for the center system 1 including a plurality of clients 2a, 2b, ... and 2n.

Referring to FIG. 11, the clients 2a, 2b, ... 2n in the center system 1 each initiate regularly and periodically the process steps shown in the figure as follows.

The process begins in step S11 where an inquiry is made regarding whether information is received from any one of the plurality of image forming apparatuses, which are provided by a plurality of customers A, B, ..., and which are divided into a predetermined number of groups.

If the information is received from any of the image forming apparatuses already, the process proceeds to Step 12, where a program is executed to identify the kind of the received information.

Subsequently, the thus received information is processed in step 13 so as to be accumulated into the temporal reception DB 59b included in the server 3.

After step 13, the process proceeds to step 14, where a program is executed, in response to the kind of the received information identified above, to retrieve from the temporal reception DB 59b the corresponding information which is received from other image forming apparatuses included in the same groups other than that, from which the information is originally received.

For example, if the service center is 'Yokohama SS' included in FIG. 5 for controlling the other image forming apparatuses within its interconnection, image forming apparatuses to be presently subjected can be identified, by retrieving the customer DB 59a, as those having the name and number of the apparatus such as ┌XX ··· 1┘, ┌XX ··· 5┘ and ┌XX ··· m┘ (in response to the pre-maintenance information received, in the present case).

Based on the retrieved information, an inquiry is subsequently made whether there exists, among the apparatuses ┌XX ··· 1┘, ┌XX ··· 5┘ and ┌XX ··· m┘, for which no processing action has been taken based on the pre-maintenance information (i.e., the information notifying the arrival of the pre-maintenance date). When such image forming apparatuses are found, they are then subjected to possible maintenance process.

For example, an assumption is made in that the information reception ID code is ┌80┘ for that notifying the arrival of the pre-maintenance date, as shown in FIG. 6. Accordingly, there retrieved are the apparatuses ┌XX ··· 10┘, ┌XX ··· 01┘, ┌XX ··· 31┘ and ┌XX ··· 02┘. Since the maintenance process was already completed (= 0) for ┌XX ··· 10┘ as indicated in the fifth column of the table, the above retrieved apparatuses other than ┌XX ··· 10┘ are therefore subjected to the maintenance process.

As described above, when information is received by the respective clients 2a, 2b, ... 2n in the center system 1 from any one of the plurality of image forming apparatuses, which are divided into a predetermined number of groups, the center system 1 instructs to accumulate the received information into the temporal reception DB 59b, and to retrieve from the temporal reception DB 59b, in response to the kind of the received information obtained previously, the related information already received from all of the other image forming apparatuses included in the same groups other than that, from which the information is originally transmitted.

With the thus retrieved information in a similar manner to the first embodiment, a service engineer can therefore deal with incoming information by effective remedial measures in efficient and economical manner when the information is received.

In addition, the center system 1 does not instruct to collect additional information in the present embodiment, thereby incurring no additional cost of communication. As a result, the cost of the service operation is further reduced.

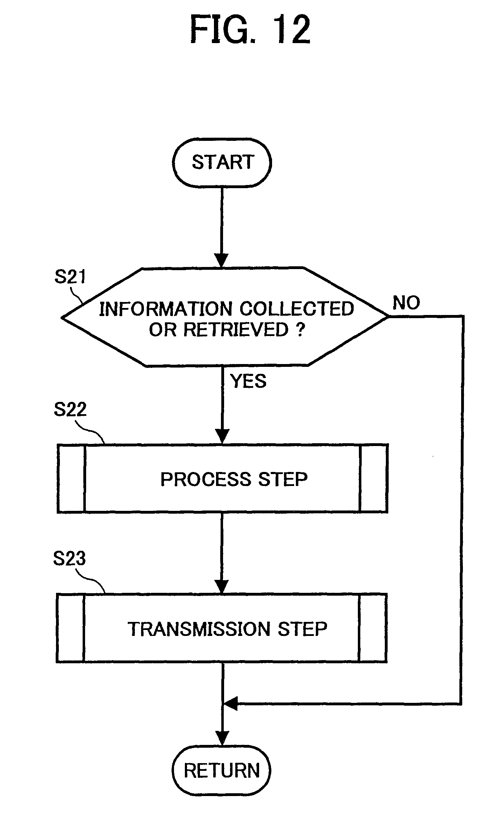

Process steps according to a third embodiment are described herein below with reference to FIG. 12, which includes a flow chart illustrating an information process flow for the center system 1 including a plurality of clients 2a, 2b, ... 2n.

In the present embodiment, after completing the process steps shown in FIGS. 10 and 11, which the clients 2a, 2b, ... 2n in the center system 1 each initiate regularly and periodically, the steps shown in FIG. 12 are additionally carried out.

These additional steps are also initiated regularly and periodically in similar manner to those of FIGS. 10 and 11, in which an inquiry is made first in Step 21 whether any information is present regarding to the information either collected in process steps of FIG. 10, or retrieved in process steps of FIG. 11.

If such information is present, the process proceeds to Step 22, where a program is executed to proceed as follows.

Namely, several pieces of information such as either received from the plurality of image forming apparatuses, which are provided by the plurality of customers A, B, ..., and divided into the predetermined number of groups; collected in the process steps shown in FIG. 10; or retrieved in the process steps shown in FIG. 11, are respectively processed.

After completing Step 22, the process proceeds to Step 23, where a program is executed for the center system to be transmissively connected to the respective terminal units 7a, 7b, ... 7n (or computer systems), and to transmit the above noted several processed information thereto.

These terminal units 7a, 7b, ... 7n are, in turn, already provided by the plurality of service centers to control the plurality of image forming apparatuses, which are provided by a plurality of customers A, B, ..., in a manner divided into a predetermined number of groups.

As an example, information regarding the arrival of the pre-maintenance date is either received from an image forming apparatus, or from other image forming apparatuses included in the same groups other than that, from which the information is originally received; or obtained through retrieval process from the temporal reception DB 59b, the process proceeds as follows.

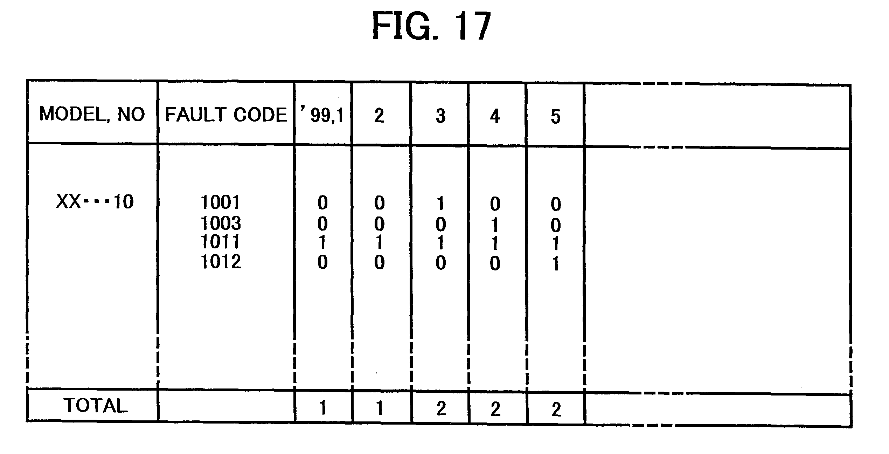

That is, the record for the currently subjected apparatus is processed for the period ranging from the previous maintenance to the time when the current information is either received, or retrieved from the temporal reception DB 59b. This is exemplified in FIG. 17, as the kind of the fault reported, and the number of monthly occurrence of the fault for this subjected apparatus.

The thus processed information or record is subsequently file transferred to a terminal (or computer system) which is attended by a personnel in charge of the service center, or by a sales engineer (or service engineer) for the area.

On the receipt of the processed information from the center system 1, the terminal instructs for a display unit to display the content of the processed information so as to be readily observed by a terminal operator.

As a result, it becomes feasible for the operator (i.e., the personnel in charge of the service center or the sales engineer in charge of the area) to clearly recognize the trend of the fault occurrence through the graphic representation of the thus received information, and to carry out maintenance operations which are fortified with effective remedial measures further added through the examination of the fault trend which is displayed as above.

As described above, after completing similar process steps as those of the previous embodiments 1 and 2, the clients 2a, 2b, ... 2n in the center system 1 instructs to further carry out the processing the information either received or retrieved, subsequently be transmissively connected to the respective terminal units 7a, 7b, ... 7n (or computer systems) which are provided by the plurality of service centers so as to control the plurality of image forming apparatuses, and to transmit the above noted several processed information thereto.

In addition to the advantages in the previous embodiments, therefore, there are required no information processing at the terminals 7a, 7b, ... 7n (or computer systems). As a result, time and cost for these steps can be reduced.

It is noted that the connection may alternatively be established directly to a terminal (e.g., handheld computer unit) owned by service engineer, to thereby be able to transfer directly the processed information or data.

Process steps according to a fourth embodiment are described, in which the clients 2a. 2b, ... 2n in the center system 1 carries out similar process steps as those of the previous embodiments 1, 2 and 3.

In the present embodiment, however, the kind of information (i.e., the information received from the plurality of image forming apparatuses which are provided by the plurality of customers A, B, ... , and divided into a predetermined number of groups) to be either received or retrieved can be set in advance by input operations with the keyboard 42.

For example, this setting operation may be carried out regarding to the thus items such as pre-maintenance, expendable supplies and material, fault, alarm (which is sent when a specified value is exceeded, although not the fault), and the combination thereof.

Accordingly, when information is received regarding to the set items such as, for example, pre-maintenance and supplies from at least one of the plurality of image forming apparatuses (FIG. 1 or 8), which are provided by the plurality of customers A, B, ... and divided into a predetermined number of groups, a program is executed to collect the information related to the set items from other image forming apparatuses included in the same groups other than that, from which the information is originally received, and also to retrieve the previously received and stored (or accumulated) information from the temporal reception DB 59b.

As described above, the kind of information to be either received or retrieved is set in advance in the present embodiment. Namely, when information is received by the respective clients 2a, 2b, ..., 2n in the center system 1 from any one of the plurality of image forming apparatuses, which are divided into a predetermined number of groups, the center system 1 instructs to collect the information related to the set items from other image forming apparatuses included in the same groups other than that, from which the information is originally received, and also to retrieve the previously received and stored (or accumulated) information from the temporal reception DB 59b.

Since these collection and retrieval steps are carried out in response to the kind of information set in advance in the present embodiment, it becomes feasible to alleviate undue process steps and cost of communication, and reduce the work load on to the center system.

For example, by setting 'pre-maintenance' as the item for the kind of information to be currently processed, undue time and cost for the operation can be reduced, to thereby result in efficient pre-maintenance activities.

In a similar manner, by setting 'expendable supplies and material' as the item for the kind of information, undue time and cost for the operation again can be reduced, thereby resulting in efficient handling and delivery operations of the supplies and material.

Process steps according to a fifth embodiment are described, in which the clients 2a, 2b, ... 2n in the center system 1 carries out similar process steps as those of the previous embodiments 1, 2, 3 and 4.

In the present embodiment, however, the plurality of image forming apparatuses which are provided by the plurality of customers A, B, ... , are divided in advance into a predetermined number of groups. In addition, the groups may respectively be assigned to the clients 2a, 2b, ... 2n by input operations with the keyboard 42, for example.

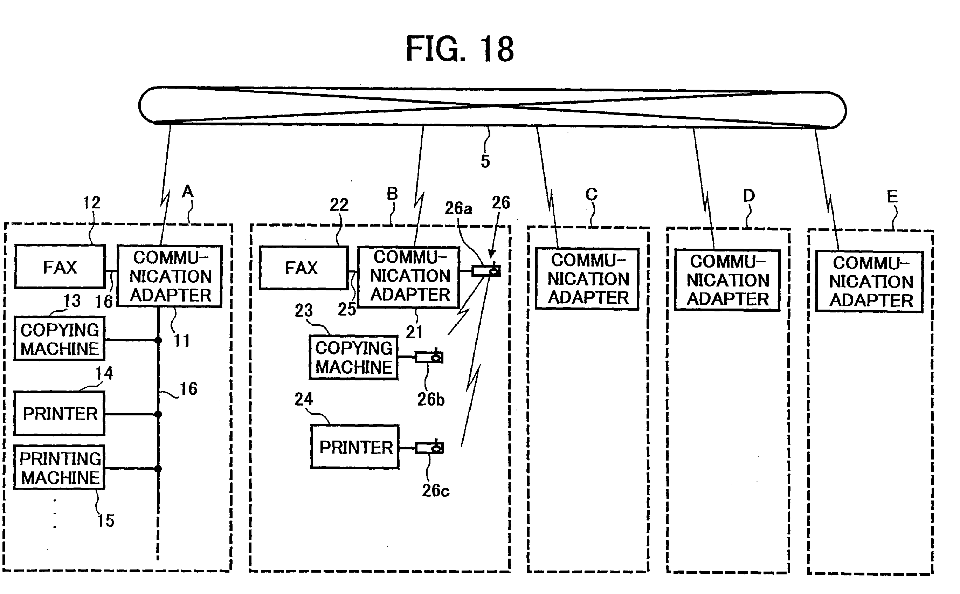

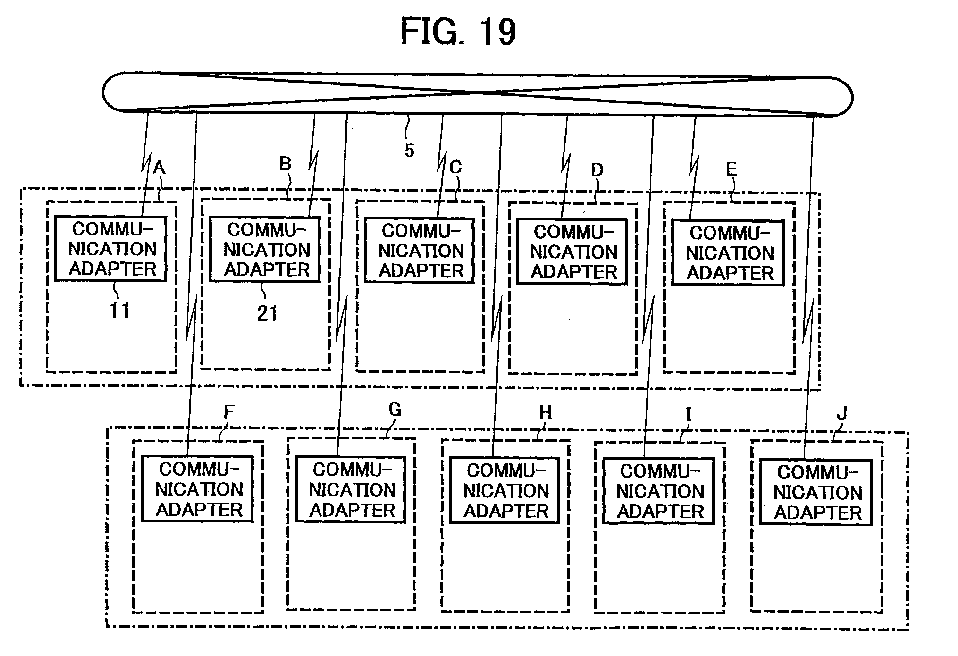

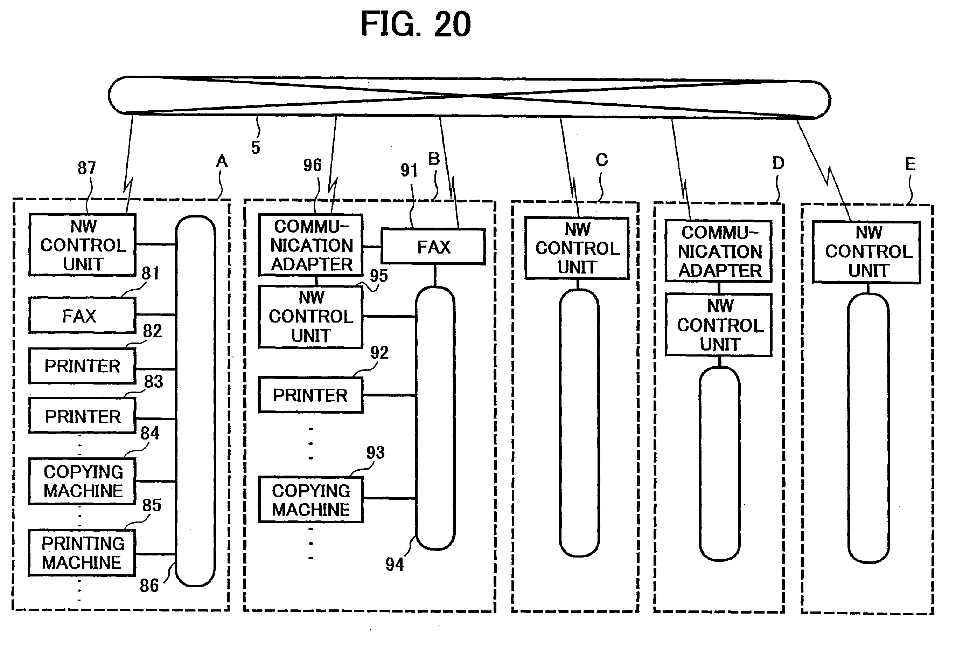

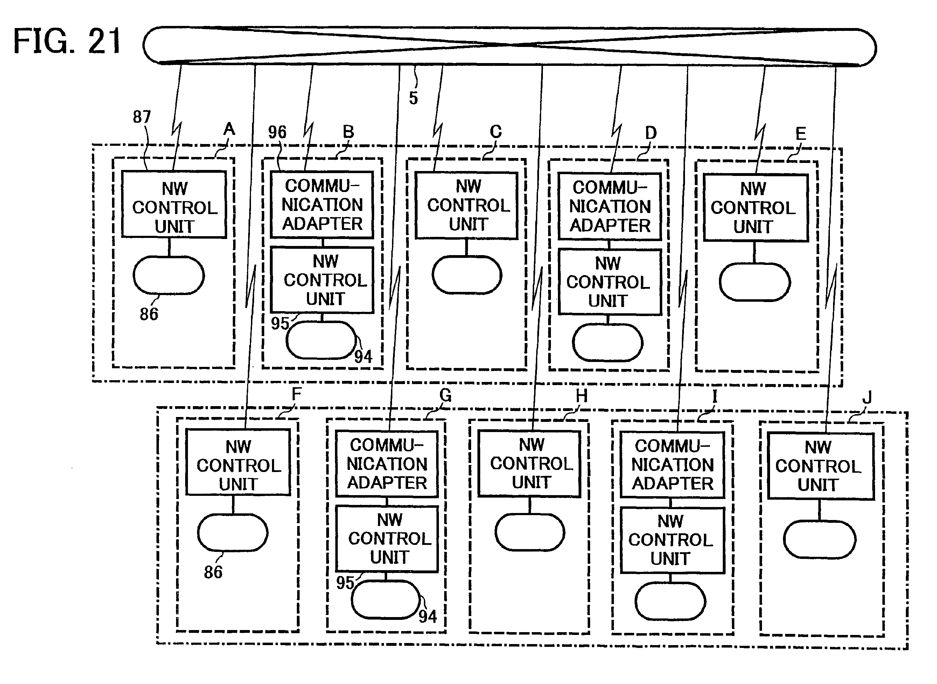

To be more specific, this assignment can be carried out in any one of the following manners (1) through (5):
(1) The plurality of groups are set such that the image forming apparatuses, which are provided by the plurality of customers A, B, ... , may respectively be assigned to be divided into a further group specified by the items such as customer' s name, service location, dealer' s name, sales district, sales department of office, building' s name, floor number, apparatus' s name, and the combination thereof.
(2) In the case where the control system for the image forming apparatuses has the construction shown in FIG. 1, the image forming apparatuses, which are provided by the plurality of customers A, B, C, D, E, ... may be assigned to be divided into another group of the apparatuses each assigned to the communication adapters, as shown in FIG. 18.
(3) In the case where the control system for the image forming apparatuses again has the construction again shown in FIG. 1, the image forming apparatuses, which are provided by the plurality of customers A, B, C, D, E, F, G, H, I, J ... may be assigned to be divided into still another group of the apparatuses each assigned a predetermined number (i.e., five in the present example) of communication adapters, as shown in FIG. 19.
(4) In the case where the control system for the image forming apparatuses has the construction interconnected via communication networks as shown in FIG. 8, the image forming apparatuses, which are provided by the plurality of customers A, B, C, D, E, ... may be assigned to be divided into another group of the apparatuses specified by each of IP addresses in the network system (or network control unit), as shown in FIG. 20.
(5) In the case where the control system for the image forming apparatuses has the construction as shown in FIG. 8, the image forming apparatuses, which are provided by the plurality of customers A, B, C, D, E, F, G, H, I, J ... may be assigned to be divided into another group of the apparatuses specified by each of a predetermined number (i.e., five in the present example) of IP addresses in the network system, as shown with dash-dotted lines in FIG. 21.

As described above, since the clients 2a, 2b, ... 2n in the center system 1 are each capable of diving in advance the plurality of image forming apparatuses which are provided by the plurality of customers A, B, ... , into a predetermined number of groups in the present embodiment, it becomes feasible to eliminate undue man-hour and cost for the data reprocessing, thereby facilitating a wider use of the present system in various applications.

In order to meet a future change in maintenance operations such as, for example, the increase in the number of customers in an area of a service location, a change in the service unit (i.e., one of the above noted division in the group) may become necessary such as from one item (e.g., service location) to another (e.g., customer' s name or apparatus name). In such a case, one fixed group of the customer data may necessitates a thorough re-processing of the data, which may require an additional and appreciable period of time.

According to the present embodiment, however, undue waste due to the data re-processing can be alleviated, thereby retaining the overall validity of the present system in processing (or grouping) the information.

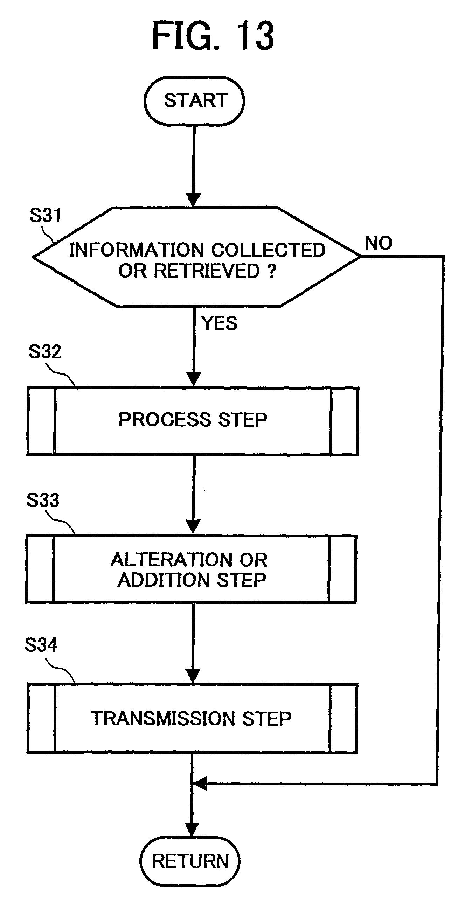

Information process steps according to a sixth embodiment are described herein below with reference to FIG. 13, which includes a flow chart illustrating an information process flow for the center system 1 including a plurality of clients 2a, 2b, ... 2n.

In the present embodiment, after completing the process steps shown in FIGS. 10 and 11, which the clients 2a, 2b, ... 2n in the center system 1 each initiate regularly and periodically, those shown in FIG. 13 are additionally carried out.

The additional steps in FIG. 13 are also initiated regularly and periodically in similar manner to those of FIGS. 10 and 11, in which an inquiry is made first in Step 31 whether any information is present regarding to the information either collected in the process steps shown in FIG. 10, or retrieved in the process steps shown in FIG. 11.

If such information is present, the process proceeds to Step 32, where a program is executed to proceed as follows.

Namely, several pieces of information such as either received from the plurality of image forming apparatuses, which are provided by the plurality of customers A, B, ..., and which are divided into the predetermined number of groups; collected in the process steps shown in FIG. 10; or retrieved in the process steps shown in FIG. 11, are respectively processed.

After completing Step 32, the process proceeds to Step 33, where steps are taken on the above processed information to make any alteration or addition, if necessary. The necessary items may be exemplified by those such as early action required, propriety for the maintenance operation, customer requirements, technical information and others.

After completing Step 33, the process proceeds to Step 34, where a program is executed for the center system to be transmissively connected to the respective terminal units 7a, 7b, ... 7n (or computer systems), and to transmit the above noted several processed information thereto.

These terminal units 7a, 7b, ... 7n are, in turn, already provided by the plurality of service centers so as to control the plurality of image forming apparatuses, which are provided by a plurality of customers A, B, ..., in a manner divided into a predetermined number of groups.

When the clients 2a, 2b, ... 2n in the center system 1 transmit the thus processed information primarily in a fixed format, there may give rise the failure in appropriate responding action. This is caused when an important or most urgent point of the information such as 'occurrence of the unit failure' in the customer comments is necessary, the fixed format is not sufficient to report the important point, thereby necessitating additional means such as telephone or facsimile, while failing in quick responding action on the other.

Alternatively, when the clients 2a, 2b, ... 2n in the center system 1 transmits the thus processed information again in a fixed format, the alteration or revision of the transmitted information in that format may necessitate a considerable work load of an operator at the swerve depot, thereby causing additional work load and undue period of time.

Since the clients 2a, 2b, ... 2n in the center system 1 are each capable of providing the alteration and addition onto the processed information in the present embodiment, the utility of the processed information with the system is further increased by the addition of a requisite and important comment, for example. In addition, more effective measures can be taken in the event where any alteration or addition becomes necessary with the present system.

As a result, more effective and detailed maintenance operations becomes feasible for the image forming apparatuses.

Process steps according to a seventh embodiment are described, in which the clients 2a, 2b, ... 2n in the center system 1 carries out similar process steps as those of the previous embodiments 3 through 6, including transmitting the processed information.

In the present embodiment, however, the destination of information transmission is set in advance by input operations with the keyboard 42, for example.

In similar manner to those shown in FIG. 13, the clients 2a, 2b, ... 2n in the center system 1 is adapted to operate as follows.

Namely, information either received or retrieved is first processed in Step 32. After completing Step 32, necessary alteration or addition is made in Step 33, and several terminal units among 7a, 7b, ... 7n (or computer systems), which are set in advance as the destination of information transmission, are transmissively connected for the transmission, and the above processed information is subsequently transmitted thereto in Step 34.

As described above, since the clients 2a, 2b, ... 2n in the center system 1 are each capable of setting in advance several terminal units among 7a, 7b, ... 7n (or computer systems), as the destination of information transmission, the processed information can be transferred automatically to respective destinations, to thereby be able reducing the work load of center operators.

For example, necessary items, which are noted earlier for the alteration or addition such as early operation required, requisite for the maintenance operation, customer requirements and technical information, are quite important not only for the service section in charge but also for service administration section and in-house quality assurance section, as well. It is therefore preferable to set these related sections as the destination for the processed information.

As noted above, the clients 2a, 2b, ... 2n in the center system 1 are each capable of providing the alteration and addition onto the processed information, and transmitting the thus prepared information to several terminal units set in advance as the destination of information transmission, to thereby be able facilitate various activities for retaining and also improving the qualities of the terminal apparatuses.

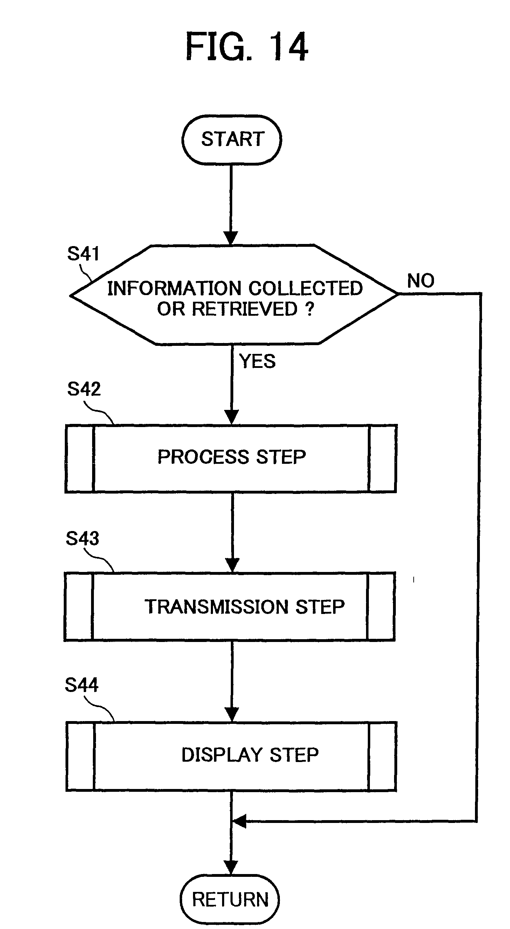

Process steps according to an eighth embodiment are described herein below with reference to FIG. 14, which includes a flow chart illustrating an information process flow for the center system 1 including a plurality of clients 2a, 2b, ... 2n.

In the present embodiment, after completing the process steps shown in FIGS. 10 and 11, in which the clients 2a, 2b, ... 2n in the center system 1 each initiate regularly and periodically, those shown in FIG. 14 are additionally carried out.

The additional steps in FIG. 12 are also initiated regularly and periodically in similar manner to those of FIGS. 10 and 11, in which an inquiry is made first in Step 41 whether any information is present regarding to the information either collected in the process steps shown in FIG. 10, or retrieved in the process steps shown in FIG. 11.

If such information is present, the process proceeds to Step 42, where a program is executed to proceed as follows.

Namely, several pieces of information such as either received from the plurality of image forming apparatuses, which are provided by the plurality of customers A, B, ..., and which are divided into the predetermined number of groups; collected in the process steps shown in FIG. 10; or retrieved in the process steps shown in FIG. 11, are respectively processed.

After completing Step 42, the process proceeds to Step 43, where the clients 2a, 2b, ... 2n in the center system 1 instructs to be transmissively connected to the respective terminal units 7a, 7b, ... 7n (or computer systems) which are provided by the plurality of service centers so as to control the plurality of image forming apparatuses. Alternatively, the clients 2a, 2b, ... 2n may instruct to be transmissively connected to several terminal units among 7a, 7b, ... 7n, as the destination of information transmission which is set in advance. The process subsequently proceeds for the processed information to be transmitted to the destination, and to be displayed on CRT display unit 41.

Since the clients 2a, 2b, ... 2n in the center system 1 are each capable of displaying the processed information on CRT display unit 41, to thereby facilitating for the center operator to confirm the content of the information with ease, there becomes feasible with the present system are a re-transmission of the information to the terminals following possible alteration or addition of the processed information and a transmission of the information via facsimile and some other means (or backup processing) during interruption of terminal units or the fault of the network.

As a result, input errors by operators can be reduced, the disturbance on the side of terminal units 7a, 7b, ... 7n due to the transmission of the faulty information can also be reduced, and undue workload can be eliminated.

Alternatively, the clients 2a, 2b, ... 2n in the center system 1 may respectively provide alteration or addition onto the processed inforaamtion, and subsequently transmit the thus prepared information to the terminals and display on CRT display unit 41.

In addition, when a speaker or printer is installed with the center system 1, the information following the processing, or alteration or addition, may be output audibly using a voice response (output) unit through a speaker unit, or printed-out (forming images on a sheet) through a printer unit.

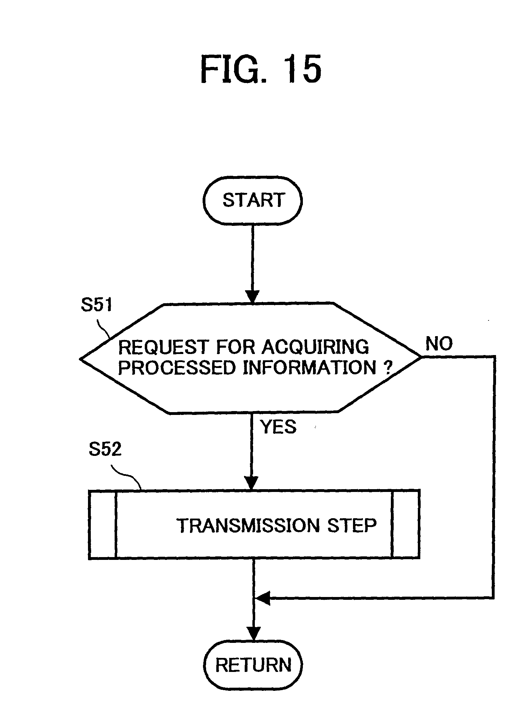

Process steps according to a ninth embodiment are described herein below with reference to FIG. 15, which includes a flow chart illustrating an information process flow for the center system 1 including a plurality of clients 2a, 2b, ... 2n.

In the present embodiment, after completing the process steps shown either in FIGS. 10 and 11, or in FIGS. 12 through 14, which the clients 2a, 2b, ... 2n in the center system 1 each initiate regularly and periodically, those shown in FIG. 15 are additionally carried out.

The additional steps in FIG. 15 are also initiated regularly and periodically, in which an inquiry is made first in Step 51 whether any request for acquiring the processed information is received from any one of the terminal units 7a, 7b, ... 7n (or computer systems), that are provided by the plurality of service centers.

If such request is present, a program is executed to send the processed information to the terminal, from which the request is received.

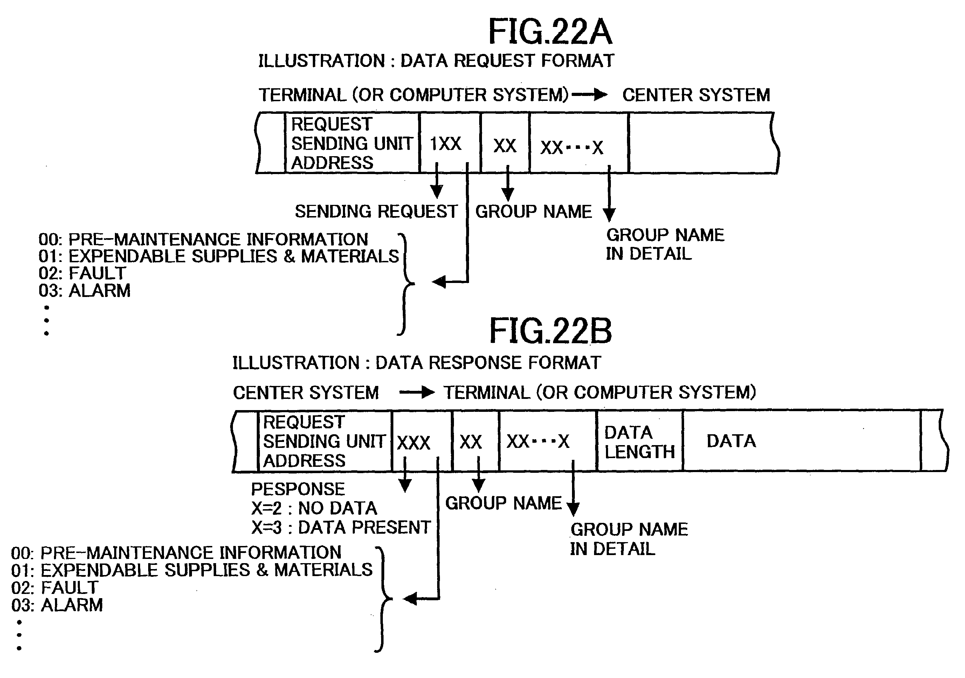

Referring to FIG. 22, there detailed herein below are the above noted request for acquiring the processed information and the responding process thereto.

The terminal units 7a, 7b, ... 7n (or computer systems), which are provided by the plurality of service centers via the network 6, can each issue request to acquire the information which is processed and provided with alteration or addition, at need, by the clients 2a, 2b, ... 2n in the center system 1 (which is altogether referred to hereinafter as 'processed information').

The data format for requesting the acquisition of the processed information (or data request format) is illustrated in FIG. 22A, in which several items for dividing into group are shown such as customer's name, service location and dealer' s name. Further detailed division of the respective items are specified by customer' s ID number for the customer' s name, or office or department; a code for service location and dealer' s name; a unit code for the apparatuses, respectively.

When a request for the processed information is received, the clients 2a, 2b, ... 2n in the center system 1 are each adapted to retrieve the temporal reception DB 59b shown in FIG. 6 based on predetermined conditions. The range for the retrieval may be set as related data, for example, over a predetermined period of time.

The thus retrieved data are subsequently replied to the sending terminal with a response in the format shown in FIG. 22B. Incidentally, there is no following data length or data field for the case of x = 2.

As described above, since the clients 2a, 2b, ... 2n in the center system 1 are each capable of transmitting processed information to the sending terminal, when any request for acquiring the processed information is received from any one of the terminal units 7a, 7b, ... 7n, it becomes feasible with the present system to carry out recovery operations by just sending a re-issuing request to the center system 1, even in the case of data loss or breakdown due to possible fault of network system 6, or failure or operational error at the side of terminal units 7a, 7b, ... 7n. The occurrence of customer' s claims can therefore be alleviated.

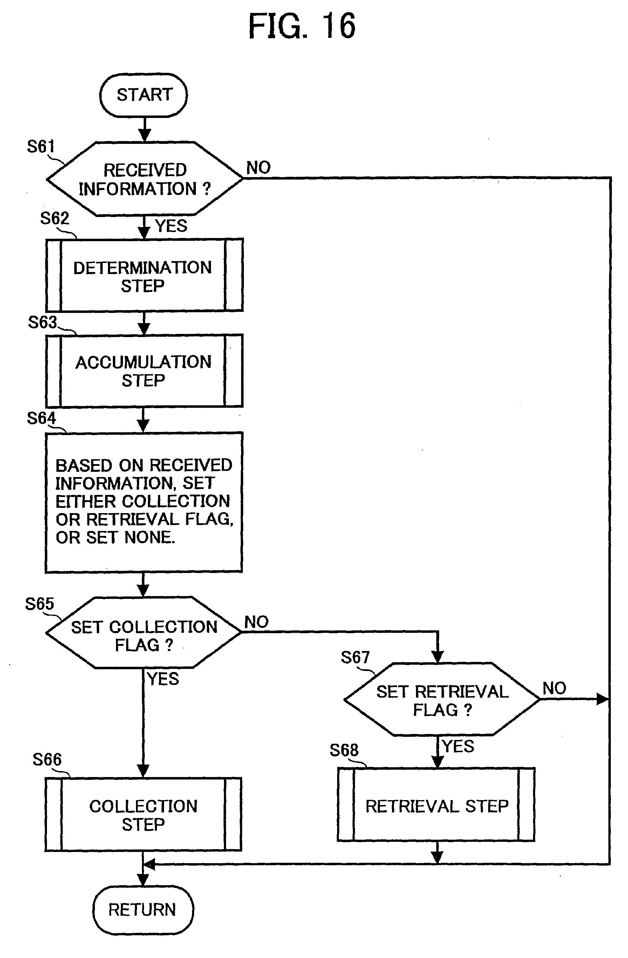

Information process steps according to a tenth embodiment are described herein below with reference to FIG. 16, which includes a flow chart illustrating an information process flow for the center system 1 including a plurality of clients 2a, 2b, ... 2n.

Referring to FIG. 16, the clients 2a, 2b, ... 2n in the center system 1 each initiate regularly and periodically the process steps shown in the figure as follows.

The process begins in step S61 where an inquiry is made regarding whether information is received from any one of the plurality of image forming apparatuses (FIG. 1 or 8), which are provided by a plurality of customers A, B, ..., and divided into the predetermined number of groups. If the information is received already from any of the image forming apparatuses, the process proceeds to Step 62, where a program is executed to identify the kind of the received information.

Subsequently, the thus received information is processed in step 63 so as to be accumulated into a temporal reception DB 59b included in the server 3.

After completing Step 3, the process proceeds to Step 64, where a program is executed either to set a flag for information collection or retrieval, or not to set any such a flag, in response to the kind of the received information identified above.

That is, the program is executed such that either one of the information collection/ processing (i.e., collecting information and related processing of the information, which will be described later on) and information retrieval/ processing (i.e., retrieving information and related processing of the information, which will be described later on) be allowed, or neither be allowed.

For example, when the newest or updated information is required on other image forming apparatuses included in the same groups other than that, from which the information is originally received, the flag for information collection is set (i.e., information collection/ processing is allowed).

In contrast, when the received information is one related to less urgent item such as, for example, pre-maintenance (i.e., for which a certain time allowance may be allocated until actual operations are needed by a service engineer), the flag for information retrieval is set (i.e., information retrieval/ processing is allowed).

When the received information is related to the items other than pre-maintenance, expendable supplies and material, fault, alarm, and when this information is received as a regular (or routine) report which usually contains information on the apparatuses which are not suffered from any anomaly, neither the flag for information collection or retrieval is set (i.e., neither the collection/ processing or retrieval/ processing of information is allowed).

After completing Step 64, the process proceeds to Step 65, where a program is executed to check whether an information collection flag is set.

Thereafter, if the flag is set, collection/ processing steps are carried out, in response to the kind of received information, on the corresponding information (on the pre-maintenance) received from image forming apparatuses included in the same groups other than that, from which the information is originally received.

If no flag is set, the process proceeds to Step 67, where a program is executed to check whether an information retrieval flag is set.

If no flag is set, the process of FIG. 16 ends. In contrast, if the flag is set, retrieval/ processing steps are carried out in response to the kind of received information, by retrieving from the temporal reception DB 59b the corresponding information (on the pre-maintenance) received from image forming apparatuses included in the same groups other than that, from which the information is originally received.

Subsequently, the process proceeds to follow any one of the group of steps shown in FIGS. 12 through 14, in which, in the case where collection/ processing steps are previously carried out, the information received from the plurality of image forming apparatuses which are provided by the plurality of customers A, B, ... , and divided into a predetermined number of groups, and the information collected through the steps of FIG. 16, are both processed.

In the case where retrieval/ processing steps are previously carried out, the information received from the plurality of image forming apparatuses which are provided by the plurality of customers A, B, ... , and divided into a predetermined number of groups, and the information retrieved through the steps of FIG. 16, are both processed.

As described above, in response to the kind, that is previously determined, of the information received from any one of the plurality of image forming apparatuses divided into a predetermined number of groups, the clients 2a, 2b, ... 2n in the center system 1 are each capable of instructing to either one of the information collection/ processing step and retrieval/ processing step be allowed, or neither of the steps be allowed.

As a result, undue process steps and cost of communication can be alleviated, and the work load onto the center system can be reduced, to thereby be able to retain the overall validity of the present system in handling and processing the information.

The systems and process steps set forth in the present description may be implemented by executing a plurality of programs stored in various storage media. For example, storage media may be prepared for storing a variety of programs for the clients 2a, 2b, ... 2n in the center system 1 to execute the above described steps for processing information and deciding conditions. The storage media may include computer accessible storage media such as a floppy disk and optical disk, among others.

These storage media may be installed into a floppy disk unit and CD-ROM reader, respectively, in a conventional general-purpose processor, to thereby for the programs stored therein be read out and installed further into an internal hard disk unit. As a result, the capability of the image forming apparatus control system can be properly carried out.

The systems and process steps set forth in the present description may therefore be implemented using a conventional general purpose processor programmed according to the teachings disclosed herein, as will be appreciated to those skilled in the relevant arts.

Therefore, the present disclosure also includes a computer-based product which may be hosted on a storage medium and include instructions which can be used to program a processor to perform a process in accordance with the present disclosure. In addition to the hard disk device mentioned earlier in the disclosure, the storage medium can include, but is not limited to, any type of disk including floppy disks, optical disks, CD-ROMS, magneto-optical disks, ROMs, RAMs, EPROMs, EEPROMS, flash memory, magnetic or optical cards, or any type of media suitable for storing electronic instructions.

Although the system and method are detailed herein above primarily with specific embodiments of remotely controlling image forming apparatuses, it is needless to add that the control system and method incorporating the storage medium may also be adopted to other apparatus and center system such as a keycard control apparatus for managing the number of copy duplication for respective groups, gas meter, electric power meter, vending machine, among others.

It is apparent from the above description including the examples, service activities upon receiving information concerning various apparatuses including image forming apparatuses can be performed with the system and method disclosed herein in an efficient and economical manner, and it becomes feasible to increase the efficiency in the service activity and to reduce undue cost for the activity.

Additional modifications and variations of the present invention are possible in light of the above teachings. It is therefore to be understood that within the scope of the appended claims, the invention may be practiced other than as specifically described herein.

## Claims

1. A remote control system configured to control a plurality of apparatuses including at least an image forming apparatus, comprising:
a central control system comprising a computer unit at least for receiving information from said plurality of apparatuses by way of respective telecommunication networks interconnected to said plurality of apparatuses, and for remotely controlling said plurality of apparatuses based on said information received by way of said respective telecommunication networks; and
information collection means for collecting, based on a kind of said information presently received, related information from all of said plurality of apparatuses included in a same groups other than that, from which said information is originally transmitted, in the case where said information is received by said central control system from any one of said plurality of apparatuses to be remotely controlled, which are divided into a predetermined number of groups.

2. The remote control system according to claim 1, further comprising:
information processing means for processing said information which is acquired by any one of means of being received from said plurality of apparatuses and being collected by said information collection means; and
information transmission means for transmissively connecting to respective computer systems (or terminal units) provided by a plurality of service centers so as to control said plurality of image forming apparatuses in a manner divided into a predetermined number of groups, and subsequently transmitting said information processed by said information processing means;

3. The remote control system according to claim 1, further comprising:
means for setting in advance a kind of said information, for which said collection process by said information collection means is allowed.

4. The remote control system according to claim 1,
wherein said information collected from all of said plurality of apparatuses to be remotely controlled by said information collection means is related to pre-maintenance.

5. The remote control system according to claim 1,
wherein said information collected from all of said plurality of apparatuses to be remotely controlled by said information collection means is related to expendable supplies and material.

6. The remote control system according to claim 1, further comprising:
group setting means for setting a group in advance by dividing said plurality of image forming apparatuses into a predetermined number of groups.

7. A remote control system configured to control a plurality of apparatuses including at least an image forming apparatus, comprising:
a central control system comprising a computer unit at least for receiving information from said plurality of apparatuses by way of respective telecommunication networks interconnected to said plurality of apparatuses, and for remotely controlling said plurality of apparatuses based on said information received by way of said respective telecommunication networks;
information accumulation means for accumulating information, in the case where said information is received by said central control system from any one of said plurality of apparatuses to be remotely controlled, which are divided into a predetermined number of groups; and
information retrieval means for retrieving, based on a kind of said information presently received, related information from all of said plurality of apparatuses included in a same groups other than that, from which said information is originally transmitted, in the case where said information is received by said central control system from any one of said plurality of apparatuses.

8. The remote control system according to claim 7, further comprising:
information processing means for processing said information which is acquired by any one of means of being received from said plurality of apparatuses and being retrieved by said information retrieval means; and
information transmission means for transmissively connecting to respective computer systems provided by a plurality of service centers so as to control said plurality of image forming apparatuses in a manner divided into a predetermined number of groups, and subsequently transmitting said information processed by said information processing means.

9. The remote control system according to claim 7, further comprising:
means for setting in advance a kind of said information, for which said retrieval process by said information retrieval means is allowed.

10. The remote control system according to claim 7,
wherein said information
which is acquired by any one of means of being received from said plurality of apparatuses and being retrieved by said information retrieval means is related to pre-maintenance.

11. The remote control system according to claim 7,
wherein said information collected from all of said
plurality of apparatuses to be remotely controlled by said information collection means is related to expendable supplies and material.

12. The remote control system according to claim 7, further comprising:
group setting means for setting a group in advance by dividing said plurality of image forming apparatuses into a predetermined number of groups.

13. The remote control system according to claim 12, further comprising:
a plurality of communication adapters connected to said plurality of image forming apparatuses for communicating with said central control system,
wherein said group setting means divides said plurality of image forming apparatuses into a number of groups each assigned to said communication adapters.

14. The remote control system according to claim 12, further comprising:
a plurality of communication adapters connected to said plurality of image forming apparatuses for communicating with said central control system,
wherein said group setting means divides said plurality of image forming apparatuses into a number of groups each assigned to a predetermined number of said respective communication adapters.

15. The remote control system according to claim 12,
wherein said plurality of image forming apparatuses are interconnected by way of communication networks incorporating a network control unit, and
wherein said group setting means divides said plurality of image forming apparatuses into a number of groups each assigned to an IP address in said network system.

16. The remote control system according to claim 12,
wherein said plurality of image forming apparatuses are interconnected by way of communication networks incorporating a network control unit, and
wherein said group setting means divides said plurality of image forming apparatuses into a number of groups each assigned to a predetermined number of IP addresses in said network system.

17. The remote control system according to claim 2, further comprising:
means for performing alteration and addition onto said information processed by said information processing means.

18. The remote control system according to claim 2, further comprising:
means for setting a destination of information transmission performed by said information transmission means.

19. The remote control system according to claim 2, further comprising:
means for outputting said information processed by said information processing means through the means of at least one of image formation on a display device, a paper sheet and audible voice.

20. The remote control system according to claim 2, further comprising:
means for transmitting said information processed by said information processing means, in case where a request for acquiring said processed information is received from any one of terminal units.

21. The remote control system according to claim 8, further comprising:
means for performing alteration and addition onto said information processed by said information processing means.

22. The remote control system according to claim 8, further comprising:
means for setting a destination of information transmission performed by said information transmission means.

23. The remote control system according to claim 8, further comprising:
means for outputting said information processed by said information processing means through the means of at least one of image formation on a display device, a paper sheet and audible voice.

24. The remote control system according to claim 8, further comprising:
means for transmitting said information processed by said information processing means, in case where a request for acquiring said processed information is received from any one of terminal units.

25. A remote control system configured to control a plurality of apparatuses including at least an image forming apparatus, comprising:
a central control system comprising a computer unit at least for receiving information from said plurality of apparatuses by way of respective telecommunication networks interconnected to said plurality of apparatuses, and for remotely controlling said plurality of apparatuses based on said information received by way of said respective telecommunication networks;
information collection means for collecting, based on a kind of said information presently received, related information from all of said plurality of apparatuses included in a same groups other than that, from which said information is originally transmitted, in the case where said information is received by said central control system from any one of said plurality of apparatuses to be remotely controlled, which are divided into a predetermined number of groups;
first information processing means for processing said information received from any one of said plurality of apparatuses;
first information transmission means for transmissively connecting to respective terminal units provided by a plurality of service centers so as to control said plurality of image forming apparatuses in a manner divided into a predetermined number of groups, and subsequently transmitting said information processed by said information processing means;
information accumulation means for accumulating information, in the case where said information is received from any one of said plurality of apparatuses to be remotely controlled, which are divided into a predetermined number of groups;
information retrieval means for retrieving, based on a kind of said information presently received, related information from all of said plurality of apparatuses included in a same groups other than that, from which said information is originally transmitted, in the case where said information is received by said central control system from any one of said plurality of apparatuses;
second information processing means for processing said information at least one of received from any one of said plurality of apparatuses and retrieved by said information retrieval means;
second information transmission means for transmissively connecting to respective terminal units provided by a plurality of service centers so as to control said plurality of image forming apparatuses in a manner divided into a predetermined number of groups, and subsequently transmitting said information processed by said information processing means; and
means for determining one between following two: whether any one of processing steps by said information collection means, said first information processing means, said first information transmission means, said information retrieval means, said second information processing means, and said second information transmission means, is allowed, and none of said steps is allowed.

26. A method for controlling a plurality of apparatuses including at least an image forming apparatus, comprising the step of:
receiving information relayed to a central control system from said plurality of apparatuses by way of respective telecommunication networks;
controlling remotely said plurality of apparatuses based on said information;
collecting information related to pre-maintenance and to expendable supplies and material from all of said plurality of apparatuses included in a same groups other than that, from which said information is originally transmitted, in the case where said information related to pre-maintenance and to expendable supplies and material is received from any one of said plurality of apparatuses;
processing received and collected information by information processing means;
transmissively connecting to respective terminal units provided by a plurality of service centers so as to control said plurality of image forming apparatuses in a manner divided into a predetermined number of groups; and
transmitting said information processed by said information processing means.

27. The method according to claim 26, further comprising the step of:
providing alteration and addition onto said information processed by said information processing means.

28. The method according to claim 26, further comprising the step of:
outputting said information processed by said information processing means through the means of at least one of image formation on a display device, a paper sheet and audible voice.

29. The method according to claim 26, further comprising the step of:
transmitting said information processed by said information processing means, in case where a request for acquiring said processed information is received from any one of terminal units.

30. A method for controlling a plurality of apparatuses including at least an image forming apparatus, comprising the step of:
receiving information relayed to a central control system from said plurality of apparatuses by way of respective telecommunication networks; and
controlling remotely said plurality of apparatuses based on said information;
accumulating information in a memory unit, in the case where said information related to pre-maintenance and to expendable supplies and material is received, in the case where said information related to pre-maintenance and to expendable supplies and material is received from any one of said plurality of apparatuses;
retrieving related information from said memory unit, based on a kind of said information presently received, from all of said plurality of apparatuses included in a same groups other than that, from which said information is originally transmitted;
processing received and retrieved information;
transmissively connecting to respective terminal units provided by a plurality of service centers so as to control said plurality of image forming apparatuses in a manner divided into a predetermined number of groups; and
transmitting said information processed by said information processing means.

31. The method according to claim 30, further comprising the step of:
performing alteration and addition onto said information processed by said information processing means.

32. The method according to claim 30, further comprising the step of:
outputting said information processed by said information processing means through the means of at least one of image formation on a display device, a paper sheet and audible voice.

33. The method according to claim 30, further comprising the step of:
transmitting said information processed by said information processing means, in case where a request for acquiring said processed information is received from any one of terminal units.

34. A central control system configured to control a plurality of apparatuses including at least an image forming apparatus, based on information received by said central control system by way of respective telecommunication networks interconnected at least to said plurality of apparatuses, said central system being included in a remote control system, comprising:
information collection means for collecting, based on a kind of said information presently received, related information from all of said plurality of apparatuses included in a same groups other than that, from which said information is originally transmitted, in the case where said information related to pre-maintenance and to expendable supplies and material is received by said central control system from any one of said plurality of apparatuses to be remotely controlled, which are divided into a predetermined number of groups.

35. The central control system according to claim 34, further comprising:
information processing means for processing said information which is acquired by any one of means of being received from said plurality of apparatuses and being collected by said information collection means; and
information transmission means for transmissively connecting to respective terminal units provided by a plurality of service centers so as to control said plurality of image forming apparatuses in a manner divided into a predetermined number of groups, and subsequently transmitting said information processed by said information processing means;

36. The central control system according to claim 34, further comprising:
means for setting in advance a kind of said information, for which said collection process by said information collection means is allowed.

37. The central control system according to claim 34, further comprising:
group setting means for setting a group in advance by dividing said plurality of image forming apparatuses into a predetermined number of groups.

38. A central control system configured to control a plurality of apparatuses including at least an image forming apparatus, based on information received by said central control system by way of respective telecommunication networks interconnected at least to said plurality of apparatuses, said central system being included in a remote control system, comprising:
information accumulation means for accumulating information, in the case where said information is received by said central control system from any one of said plurality of apparatuses to be remotely controlled, which are divided into a predetermined number of groups; and
information retrieval means for retrieving, based on a kind of said information presently received, related information from all of said plurality of apparatuses included in a same groups other than that, from which said information is originally transmitted, in the case where said information related to pre-maintenance and to expendable supplies and material is received by said central control system from any one of said plurality of apparatuses.

39. The central control system according to claim 38, further comprising:
information processing means for processing said information which is acquired by any one of means of being received from said plurality of apparatuses and being retrieved by said information retrieval means; and
information transmission means for transmissively connecting to respective terminal units provided by a plurality of service centers so as to control said plurality of image forming apparatuses in a manner divided into a predetermined number of groups, and subsequently transmitting said information processed by said information processing means;

40. The central control system according to claim 38, further comprising:
means for setting in advance a kind of said information, for which said retrieval process by said information retrieval means is allowed.

41. The central control system according to claim 38, further comprising:
group setting means for setting a group in advance by dividing said plurality of image forming apparatuses into a predetermined number of groups.

42. The central control system according to claim 35, further comprising:
means for performing alteration and addition onto said information processed by said information processing means.

43. The central control system according to claim 35, further comprising:
means for setting a destination of information transmission performed by said information transmission means.

44. The central control system according to claim 35, further comprising:
means for outputting said information processed by said information processing means through the means of at least one of image formation on a display device, a paper sheet and audible voice.

45. The central control system according to claim 35, further comprising:
means for transmitting said information processed by said information processing means, in case where a request for acquiring said processed information is received from any one of terminal units.

46. The central control system according to claim 39, further comprising:
means for perfroming alteration and addition onto said information processed by said information processing means.

47. The central control system according to claim 39, further comprising:
means for setting a destination of information transmission performed by said information transmission means.

48. The central control system according to claim 35, further comprising:
means for outputting said information processed by said information processing means through the means of at least one of image formation on a display device, a paper sheet and audible voice.

49. The central control system according to claim 39, further comprising:
means for transmitting said information processed by said information processing means, in case where a request for acquiring said processed information is received from any one of terminal units.

50. A central control system configured to control a plurality of apparatuses including at least an image forming apparatus, based on information received by said central control system by way of respective telecommunication networks interconnected at least to said plurality of apparatuses, said central system being included in a remote control system, comprising:
information collection means for collecting, based on a kind of said information presently received, related information from all of said plurality of apparatuses included in a same groups other than that, from which said information is originally transmitted, in the case where said information related to pre-maintenance and to expendable supplies and material is received by said central control system from any one of said plurality of apparatuses to be remotely controlled, which are divided into a predetermined number of groups;
first information processing means for processing said information received from any one of said plurality of apparatuses;
first information transmission means for transmissively connecting to respective terminal units provided by a plurality of service centers so as to control said plurality of image forming apparatuses in a manner divided into a predetermined number of groups, and subsequently transmitting said information processed by said information processing means;
information accumulation means for accumulating information, in the case where said information is received from any one of said plurality of apparatuses to be remotely controlled, which are divided into a predetermined number of groups;
information retrieval means for retrieving, based on a kind of said information presently received, related information from all of said plurality of apparatuses included in a same groups other than that, from which said information is originally transmitted, in the case where said information is received by said central control system from any one of said plurality of apparatuses;
second information processing means for processing said information at least one of received from any one of said plurality of apparatuses and retrieved by said information retrieval means;
second information transmission means for transmissively connecting to respective terminal units provided by a plurality of service centers so as to control said plurality of image forming apparatuses in a manner divided into a predetermined number of groups, and subsequently transmitting said information processed by said information processing means; and
means for determining one between following two: whether any one of processing steps by said information collection means, said first information processing means, said first information transmission means, said information retrieval means, said second information processing means, and said second information transmission means, is allowed, and none of said steps is allowed.

51. A computer accessible recording medium, tangibly embodying a program of instructions executable by a central control system included in a remote control system to perform a method step for controlling a plurality of apparatuses including at least an image forming apparatus, based on information received by said central control system by way of respective telecommunication networks interconnected at least to said plurality of apparatuses, said central system being included in a remote control system, said step comprising:
collecting said information related to pre-maintenance and to expendable supplies and material by information collection means from all of said plurality of apparatuses included in a same groups other than that, from which said information is originally transmitted, in the case where said information related to pre-maintenance and to expendable supplies and material is received by said central control system from any one of said plurality of apparatuses.

52. The computer accessible recording medium according to claim 51, further comprising the steps of:
processing by information processing means said information which is acquired by any one of means of being received from said plurality of apparatuses and being collected by said information collection means;
transmissively connecting to respective terminal units provided by a plurality of service centers so as to control said plurality of image forming apparatuses in a manner divided into a predetermined number of groups; and
transmitting said information processed by said information processing means.

53. The computer accessible recording medium according to claim 51, further comprising the step of:
setting in advance a kind of said information, for which said collection process by said information collection means is allowed.

54. The computer accessible recording medium according to claim 51, further comprising the step of:
setting a group in advance by dividing said plurality of image forming apparatuses into a predetermined number of groups

55. A computer accessible recording medium, tangibly embodying a program of instructions executable by a central control system included in a remote control system to perform method steps for controlling a plurality of apparatuses including at least an image forming apparatus, based on information received by said central control system by way of respective telecommunication networks interconnected at least to said plurality of apparatuses, said central system being included in a remote control system, said steps comprising:
accumulating said information, in the case where said information is received by said central control system from any one of said plurality of apparatuses to be remotely controlled, which are divided into a predetermined number of groups; and
retrieving, based on a kind of said information presently received, related information from all of said plurality of apparatuses included in a same groups other than that, from which said information is originally transmitted, in the case where said information related to pre-maintenance and to expendable supplies and material is received by said central control system from any one of said plurality of apparatuses.

56. The computer accessible recording medium according to claim 35, further comprising the steps of:
processing by information processing means said information which is acquired by any one of means of being received from said plurality of apparatuses and being retrieved by information retrieval means;
transmissively connecting to respective terminal units provided by a plurality of service centers so as to control said plurality of image forming apparatuses in a manner divided into a predetermined number of groups; and
transmitting said information processed by said information processing means.

57. The computer accessible recording medium according to claim 35, further comprising the step of:
setting in advance a kind of said information, for which said retrieval process by said information retrieval means is allowed.

58. The computer accessible recording medium according to claim 35, further comprising the step of:
setting a group in advance by dividing said plurality of image forming apparatuses into a predetermined number of groups

59. The computer accessible recording medium according to claim 52, further comprising the step of:
performing alteration and addition onto said information processed by said information processing means.

60. The computer accessible recording medium according to claim 52, further comprising the step of:
setting a destination of information transmission performed by said information transmission means.

61. The computer accessible recording medium according to claim 52, further comprising the step of:
outputting said information processed by said information processing means through the means of at least one of image formation on a display device, a paper sheet and audible voice.

62. The computer accessible recording medium according to claim 52, further comprising the step of:
transmitting said information processed by said information processing means, in case where a request for acquiring said processed information is received from any one of terminal units.

63. The computer accessible recording medium according to claim 56, further comprising the step of:
performing alteration and addition onto said information processed by said information processing means.

64. The computer accessible recording medium according to claim 56, further comprising the step of:
setting a destination of information transmission performed by said information transmission means.

65. The computer accessible recording medium according to claim 56, further comprising the step of:
outputting said information processed by said information processing means through the means of at least one of image formation on a display device, a paper sheet, and audible voice.

66. The computer accessible recording medium according to claim 56, further comprising the step of:
transmitting said information processed by said information processing means, in case where a request for acquiring said processed information is received from any one of terminal units.

67. A computer accessible recording medium, tangibly embodying a program of instructions executable by a central control system included in a remote control system to perform method steps for controlling a plurality of apparatuses including at least an image forming apparatus, based on information received by said central control system by way of respective telecommunication networks interconnected at least to said plurality of apparatuses, said central system being included in a remote control system, said steps comprising:
collecting, based on a kind of said information presently received, related information from all of said plurality of apparatuses included in a same groups other than that, from which said information is originally transmitted, in the case where said information related to pre-maintenance and to expendable supplies and material is received by said central control system from any one of said plurality of apparatuses to be remotely controlled, which are divided into a predetermined number of groups;
processing said information received from any one of said plurality of apparatuses;
transmissively connecting to respective terminal units provided by a plurality of service centers so as to control said plurality of image forming apparatuses in a manner divided into a predetermined number of groups, and subsequently transmitting said information processed by said information processing means;
accumulating information, in the case where said information is received from any one of said plurality of apparatuses to be remotely controlled, which are divided into a predetermined number of groups;
retrieving, based on a kind of said information presently received, related information from all of said plurality of apparatuses included in a same groups other than that, from which said information is originally transmitted, in the case where said information is received by said central control system from any one of said plurality of apparatuses;
processing said information at least one of received from any one of said plurality of apparatuses and retrieved by said information retrieval means;
transmissively connecting to respective terminal units provided by a plurality of service centers so as to control said plurality of image forming apparatuses in a manner divided into a predetermined number of groups, and subsequently transmitting said information processed by said information processing means; and
determining one between following two: whether any one of processing steps by said information collection means, said first information processing means, said first information transmission means, said information retrieval means, said second information processing means, and said second information transmission means, is allowed, and none of said steps is allowed.
